# EUROPEAN PATENT APPLICATION

(11) **EP 4 738 891 A1**
(43) Date of publication of application: **06.05.2026**
(21) Application number: 25211693.4
(22) Date of filing: 28.10.2025
(51) Int. Cl.: H04R 27/00, H04S 7/00, H04R 29/00

(54) **ARRANGEMENT DESIGN SUPPORT METHOD FOR ACOUSTIC DEVICE AND INFORMATION PROCESSING DEVICE**

(30) Priority: 30.10.2024 JP 2024190776
(71) Applicant: YAMAHA CORPORATION, Hamamatsu-shi, Shizuoka 430-8650 (JP)
(72) Inventor: MIWA, Akihiro, Hamamatsu-shi, Shizuoka, 430-8650 (JP); TANAKA, Kenichi, Hamamatsu-shi, Shizuoka, 430-8650 (JP); HANADA, Kosuke, Hamamatsu-shi, Shizuoka, 430-8650 (JP); ADACHI, Yukino, Hamamatsu-shi, Shizuoka, 430-8650 (JP); SUZUKI, Yosuke, Hamamatsu-shi, Shizuoka, 430-8650 (JP)
(74) Representative: Kehl, Ascherl, Liebhoff & Ettmayr Patentanwälte Partnerschaft mbB

(57) **Abstract**

An arrangement design support method for an acoustic device includes receiving an input condition including an acoustic space and positions of a plurality of objects in the acoustic space, calculating an arrangement distribution of the acoustic device corresponding to the received input condition in the received acoustic space, outputting the calculated arrangement distribution, and correcting a position of another object in conjunction with correction of a position of at least one object of the plurality of objects based on information on an installation condition included in each of the plurality of objects, in a state where correction of the input condition is received.

## Description

### TECHNICAL FIELD

An embodiment of the present invention relates to an arrangement design support method for an acoustic device and an information processing device.

### BACKGROUND ART

Patent Literature 1 discloses a sound field simulator that simulates how a sound from a predetermined sound source in a sound field is heard at a predetermined sound receiving point based on design data of the sound field and that forms a simulated sound field in an audible room.

### CITATION LIST

### PATENT LITERATURE

Patent Literature 1: JPH05-73081A

### SUMMARY OF INVENTION

It is fairly difficult for a person who does not have expertise to determine the optimum arrangement of an acoustic device for appropriately collecting the voice of a speaker in an acoustic space.

An object of one aspect of the present disclosure is to provide an arrangement design support method for an acoustic device, which enables easy recognition of the optimum arrangement of the acoustic device in an acoustic space.

An arrangement design support method for an acoustic device according to the present disclosure includes receiving an input condition including an acoustic space and positions of a plurality of objects in the acoustic space; calculating an arrangement distribution of the acoustic device corresponding to the received input condition in the received acoustic space; outputting the calculated arrangement distribution; and correcting a position of another object in conjunction with correction of a position of at least one object of the plurality of objects based on information on an installation condition included in each of the plurality of objects, in a state where correction of the input condition is received.

According to an embodiment of the present invention, a user can easily know the optimum arrangement of an acoustic device in an acoustic space based on received information that does not require audio technology or audio knowledge.

### BRIEF DESCRIPTION OF DRAWINGS

FIG. 1 is a block diagram showing a configuration of an information processing device 1;
FIG. 2 is a flowchart showing an operation of a display method executed by a processor 12;
FIG. 3 is a diagram showing an example of a screen (GUI) of an application program for displaying a microphone arrangement distribution;
FIG. 4 is a diagram showing an example of the screen (GUI) of the application program for displaying a microphone arrangement distribution;
FIG. 5 shows an example of a result output screen;
FIG. 6 shows an example of the result output screen;
FIG. 7 shows an example of the result output screen;
FIG. 8 shows an example of the result output screen;
FIG. 9 shows an example of the result output screen;
FIG. 10 shows an example of the result output screen;
FIG. 11 is a diagram showing an example of a GUI according to Modification 3;
FIG. 12 is a diagram showing an example of a GUI according to Modification 5;
FIG. 13 is a diagram showing an example of a GUI according to another example;
FIG. 14 is a diagram showing an example of a GUI according to another example;
FIG. 15 is a diagram showing an example of a GUI according to another example;
FIG. 16 is a diagram showing an example of a GUI according to another example;
FIG. 17 is a diagram showing an example of a GUI according to another example;
FIG. 18 is a diagram showing an example of a GUI according to another example;
FIG. 19 is a flowchart showing an operation of a display method executed by the processor 12;
FIG. 20 is a flowchart showing an operation of a display method executed by the processor 12;
FIG. 21 is a flowchart showing an operation of a display method executed by the processor 12;
FIG. 22 is a diagram showing an example of the screen (GUI) of the application program;
FIG. 23 is a flowchart showing an operation of a display method executed by the processor 12;
FIG. 24 is a diagram showing an example of the screen (GUI) of the application program;
FIG. 25 is a diagram showing an example of a GUI using an interactive natural language processing model;
FIG. 26 is a view (a plan view) showing an example of an input condition correction operation screen;
FIG. 27 is a view (a plan view) showing an example of the input condition correction operation screen;
FIG. 28 is a view (an elevation view) showing an example of the input condition correction operation screen;
FIG. 29 is a view (an elevation view) showing an example of the input condition correction operation screen;
FIG. 30 is a view (an elevation view) showing an example of the input condition correction operation screen;
FIG. 31 is a view (a plan view) showing an example of the input condition correction operation screen;
FIG. 32 is a view (a plan view) showing an example of the input condition correction operation screen;
FIG. 33 is a view (a plan view) showing an example of the input condition correction operation screen;
FIG. 34 is a view (a plan view) showing an example of the input condition correction operation screen;
FIG. 35 is a diagram showing an example of a GUI for showing a size change of an acoustic space;
FIG. 36 is a diagram showing an example of the GUI for showing a size change of an acoustic space; and
FIG. 37 is a diagram showing an example of the GUI for showing a size change of an acoustic space.

### DESCRIPTION OF EMBODIMENTS

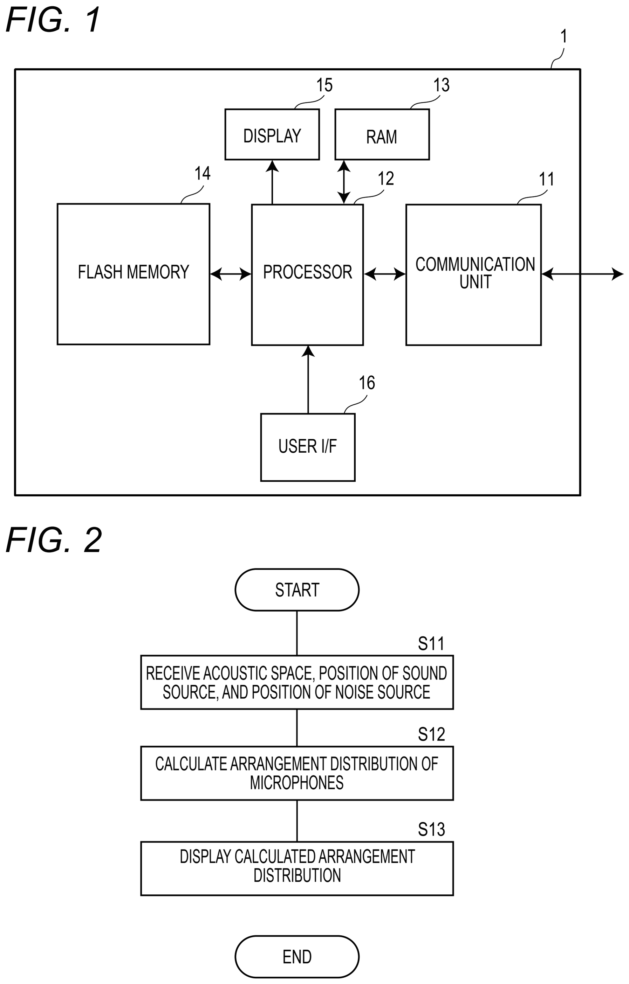

FIG. 1 is a block diagram showing a configuration of an information processing device 1. The information processing device 1 is implemented by an information processing device such as a personal computer (PC), a smartphone, a set-top box, or an audio receiver.

The information processing device 1 includes a communication unit 11, a processor 12, a RAM 13, a flash memory 14, a display 15, and a user I/F 16.

The communication unit 11 has a wireless communication function such as Bluetooth (registered trademark) or Wi-Fi (registered trademark) or a wired communication function such as USB or LAN.

The display 15 includes an LCD, an OLED, or the like. The display 15 displays a video output by the processor 12.

The user I/F 16 is an example of an operation unit. The user I/F 16 includes a mouse, a keyboard, a touch panel, or the like. The user I/F 16 receives a user operation. The touch panel may be stacked on the display 15.

The processor 12 includes a CPU, a DSP, a system on a chip (SoC), or the like. The processor 12 performs various operations by reading a program from the flash memory 14, which is a storage medium, and temporarily storing the program in the RAM 13. The program does not need to be stored in the flash memory 14. For example, the processor 12 may download the program from another device such as a server as necessary and temporarily store the program in the RAM 13.

FIG. 2 is a flowchart showing an operation of a display method executed by the processor 12. The processor 12 executes the display method shown in FIG. 2 by the application program read from the flash memory 14.

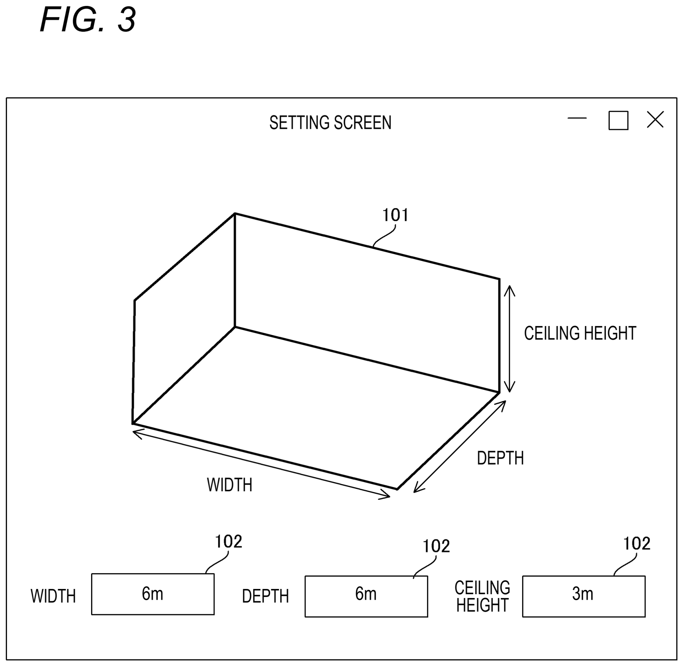

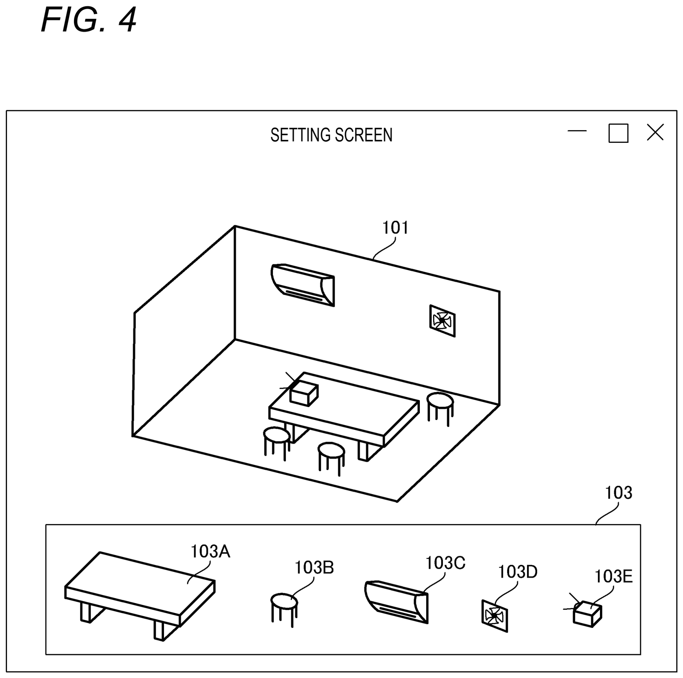

First, the processor 12 receives an acoustic space, and the position of a sound source and the position of a noise source in the acoustic space (S11). FIGS. 3 and 4 are diagrams showing an example of a screen (GUI) of an application program for displaying a microphone arrangement distribution. The processor 12 displays a setting screen as shown in FIG. 3 on the display 15 and receives setting of the acoustic space from the user via the user I/F 16.

The GUI shown in FIG. 3 includes an acoustic space interface 101 and an acoustic space setting box 102. The user sets an acoustic space via the acoustic space interface 101 or the acoustic space setting box 102. For example, the user sets the acoustic space by inputting the width, depth, and ceiling height of a room in the acoustic space setting box 102. Alternatively, the user may correct the width, depth, and ceiling height of the room by moving a mouse cursor on the GUI to a certain position on the acoustic space interface 101, clicking the mouse, and performing a drag operation. Alternatively, when the information processing device 1 includes a sensor such as LiDar, the processor 12 may scan the shape of the room via the sensor and receive the width, the depth, and the ceiling height. When there is a material that transmits light such as glass, the processor 12 can estimate the shape of the room by complementing the portion that transmits light by assuming the shape of the acoustic space to be, for example, a rectangular parallelepiped.

In the present embodiment, an example of setting a three-dimensional acoustic space is shown. Alternatively, a two-dimensional acoustic space in the plan view may be set, or a one-dimensional acoustic space along a certain direction may be set. The user may set a straight line or a curved line as the one-dimensional acoustic space. The user may set, as the two-dimensional acoustic space, a two-dimensional plane formed by straight lines, a two-dimensional plane formed by curved lines, or a composite two-dimensional plane formed by straight lines and curved lines. The user may set, as the three-dimensional acoustic space, a polyhedron formed in a polygonal shape, a columnar shape or a conical shape including a curved surface, or a spherical shape.

The setting of the acoustic space shown in FIG. 3 is an example. Alternatively, the application program may receive the acoustic space via any interface. For example, the user may input the name of a certain real concert hall or the like, and the application program may receive the shape of the acoustic space based on 3D CAD data corresponding to the received concert hall.

The processor 12 displays a GUI screen as shown in FIG. 4 on the display 15, and receives the position of the sound source and the position of the noise source in the acoustic space from the user via the user I/F 16.

The GUI shown in FIG. 4 includes the acoustic space interface 101 and an object icon 103. In the example in FIG. 4, the object icon 103 includes objects of a desk 103A, a chair 103B, an air conditioner 103C, a fan 103D, and a projector 103E. The user may input the dimension of the object as a numerical value or may adjust the dimension by a drag and drop operation. By the drag and drop operation, any object of the object icon 103 is provided in the acoustic space interface 101. At this time, the processor 12 may display coordinates of any point of the object in the acoustic space. Among the object icons 103, the objects of the desk 103A and the chair 103B correspond to the position of a conference participant (a speaker). The conference participant sits on the chair and speaks toward the desk 103A or the screen (the projection direction of the projector 103E). That is, the processor 12 estimates the position of the sound source and the direction (the front direction) of the directivity thereof based on the positional relation of the desk 103A and the chair 103B with the screen. The front direction may be input by the user on the GUI screen. The air conditioner 103C, the fan 103D, and the projector 103E correspond to the position of the noise source. Alternatively, when the information processing device 1 includes a camera, the processor 12 may estimate the position of the sound source (the chair 103B) and the position of the noise source (the air conditioner 103C, the fan 103D, and the projector 103E) by image recognition processing based on the image acquired by the camera.

Next, the processor 12 calculates an arrangement distribution of the microphones based on a predetermined model based on the received position of the sound source and the received position of the noise source in the received acoustic space (S12). The arrangement distribution of the microphones includes information on the type of the microphone, the type of input characteristics of the microphone, and the position where the microphone is to be provided. The processor 12 obtains the arrangement distribution of the microphones using a mathematical model or a trained model. The trained model is a model in which the relation among the position of the sound source, the position of the noise source, and the arrangement distribution of the microphones is trained by a deep neural network (DNN).

A computer (for example, a server of a manufacturer of a microphone) that generates a trained model acquires, as a training stage, a large number of data sets indicating correspondence among the position of the sound source, the position of the noise source, and the arrangement distribution of the microphones in an actual acoustic space. Using the acquired large number of data sets, the server trains a predetermined model using a predetermined algorithm so as to output the arrangement distribution of the microphones for the received conditions (the position of the sound source, the position of the noise source, and the like).

The algorithm for training the model may be any algorithm. As the algorithm, for example, any machine training algorithm such as a convolutional neural network (CNN) or a recurrent neural network (RNN) can be used.

The processor 12 acquires the trained model trained as described above from the server via the communication unit 11. As an execution stage, the processor 12 inputs the received acoustic space, and the position of the sound source and the position of the noise source in the acoustic space by the trained model, and obtains the corresponding arrangement distribution of the microphones.

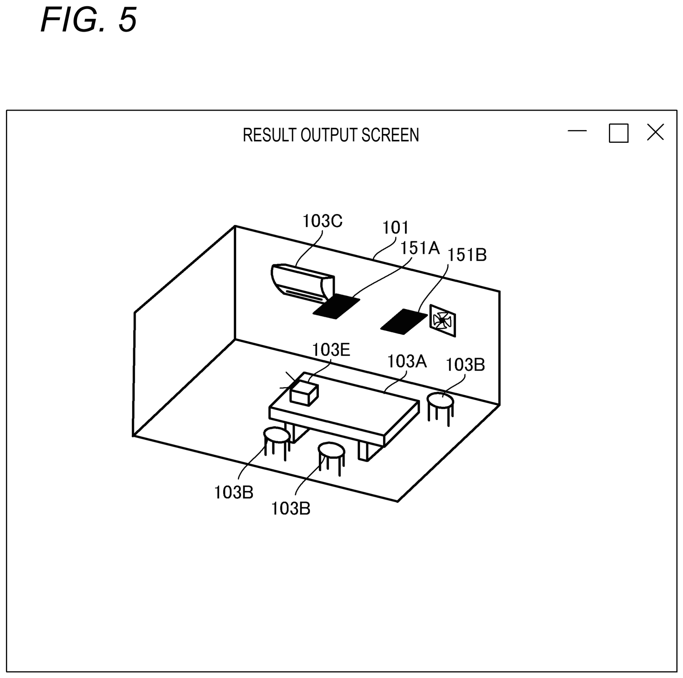

Then, the processor 12 displays the calculated arrangement distribution of the microphones on the display 15 (S13). FIG. 5 is a diagram showing an example of a result output screen. The processor 12 displays the arrangement distribution of the microphones calculated in the processing in S12 in the acoustic space set on the acoustic space interface 101. The displayed arrangement distribution of the microphones includes at least the number and positions of microphones in the set acoustic space. In the example in FIG. 5, the processor 12 displays two microphones 151A and 151B in the acoustic space interface 101. The microphones 151A and 151B are displayed at the position of the ceiling of the acoustic space interface 101.

Accordingly, the user can easily know, as a new customer experience, in addition to the desk or the chair in the set acoustic space, how many microphones are to be provided at which position in consideration of the restriction of the position of the noise source specific to the room. Therefore, even a user who does not have product knowledge of a microphone, know-how of system design in an acoustic space, or the like can select a necessary microphone according to a request and execute system design.

The processor 12 may display an input characteristic (input sensitivity) of the microphone as the arrangement distribution of the microphones. The input characteristic of the microphone is represented by, for example, a no-load voltage value (dBV) when a sound pressure of 1 kHz and 1 Pa is applied from the highest sensitivity direction.

Accordingly, the user can easily know what type of input characteristics the microphone is to have as a new customer experience. It is possible to visually check whether the microphone of the designed system can collect sound in a necessary area (hereinafter, referred to as a cover area).

The processor 12 may further receive the sound pressure of each sound source and the sound pressure of the noise source in addition to the position of the sound source and the position of the noise source. The sound pressure of the sound source corresponds to the average sound pressure level and directivity of the voice of the speakers. The sound pressure of the noise source is acquired by measuring information on the sound pressure of the noise sources (the air conditioner 103C, the fan 103D, and the projector 103E) in advance. The processor 12 may record data measured in advance in the flash memory 14 or the RAM 13 and call the data in response to an arrangement operation from the user. A computer (for example, a server of a manufacturer of a microphone) that generates a trained model acquires, as a training stage, a large number of data sets indicating correspondence among the position and the sound pressure of the sound source, the position and the sound pressure of the noise source, and the arrangement distribution of the microphones in an actual acoustic space, and trains a predetermined model using a predetermined algorithm.

The processor 12 may obtain an SN ratio (that is, a distribution A (X, Y, Z) of the SN ratio) of each position (X, Y, Z) in the acoustic space based on the position and the sound pressure of the noise source and the position and the sound pressure of the sound source, and obtain the arrangement distribution of the microphones using the distribution A (X, Y, Z) of the SN ratio as an input of a predetermined model. The arrangement distribution of the microphones is represented by, for example, a sphere (that is, a function of the distribution A (X, Y, Z) of the SN ratio) having a radius R corresponding to a sound collection range when the microphone without directivity is provided at each position (X, Y, Z) of the acoustic space.

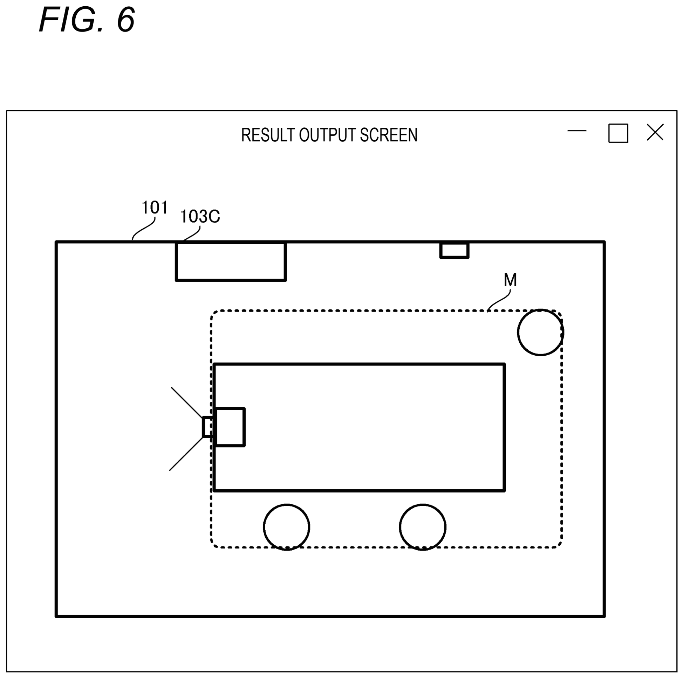

The processor 12 determines a target sound collection range based on the received positions of the desk 103A and the chair 103B. As described above, the conference participant sits on the chair and speaks toward the desk 103A or the screen (the projection direction of the projector 103E). For example, as shown in FIG. 6, the target sound collection range is a rectangular region M including all the desks 103A and the chairs 103B. Alternatively, the user may designate the sound collection range by moving a mouse cursor on the GUI to a certain position on the acoustic space interface 101, clicking the mouse, and performing a drag operation.

The processor 12 inputs the distribution A (X, Y, Z) of the SN ratio and the target sound collection range described above to a predetermined model (a trained model) to obtain the arrangement distribution of the microphones.

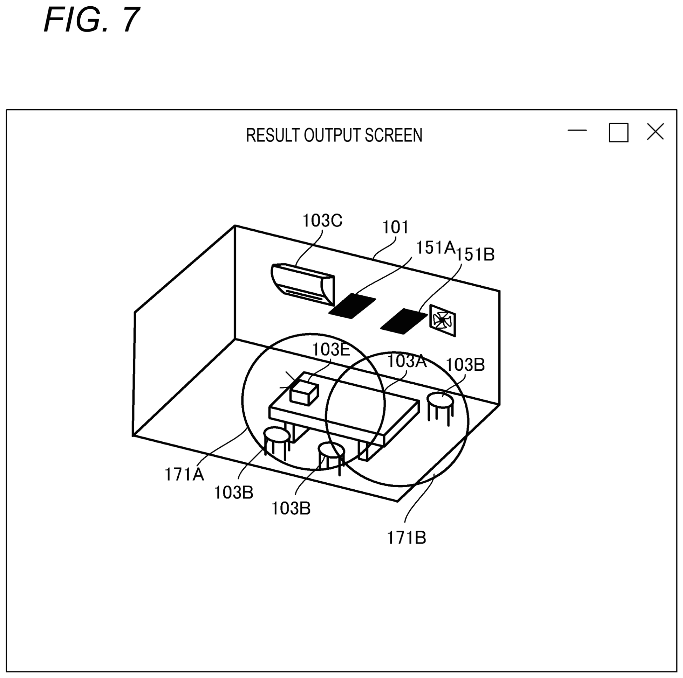

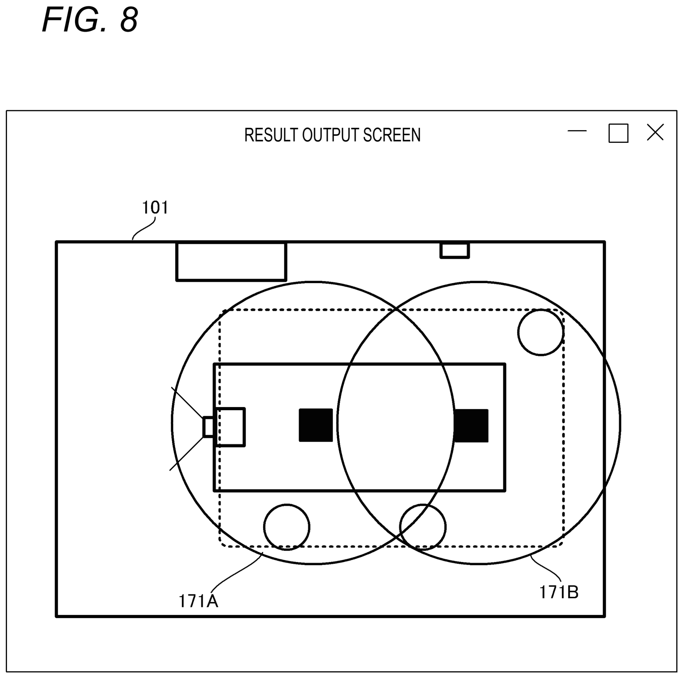

The processor 12 may display the position of each microphone and a sound collection possible range (for example, a sphere having the radius R) as the calculated arrangement distribution of the microphones. The processor 12 may display the SN ratio distribution A (X, Y, Z). For example, in the example in FIG. 7, the sound collection possible range is indicated by a sound collection range icon 171A and a sound collection range icon 171B having a spherical shape as the input characteristics of the microphone. Alternatively, the arrangement distribution of the microphones may be represented by a two-dimensional plane as shown in FIG. 8. Accordingly, as a new customer experience, the user can easily know what type of SN ratio distribution is to result from the calculated arrangement distribution of the microphones.

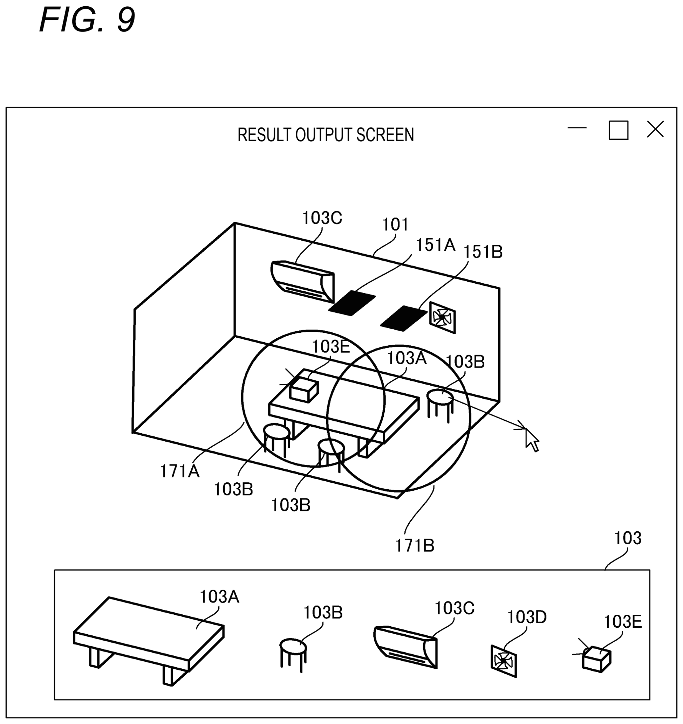

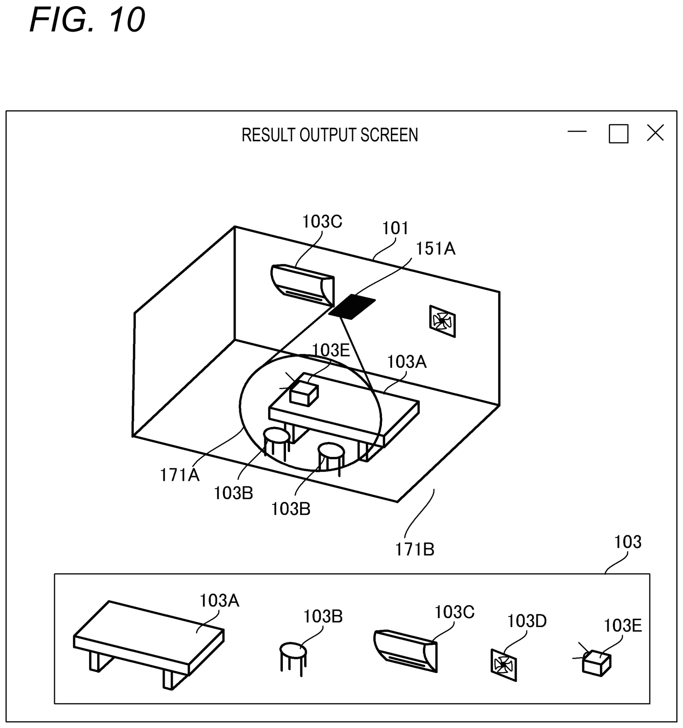

The processor 12 may receive a correction operation of the input condition on the result output screen. For example, as shown in FIG. 9, the processor 12 further displays the object icon 103 for condition input on the result output screen. The user can further add an object in the acoustic space interface 101 by dragging and dropping each object from the object icon 103. As shown in FIG. 9, the object (the chair 103B) already provided in the acoustic space interface 101 may be dragged and dropped to the outside of the acoustic space interface 101 to delete the object (the chair 103B). The processor 12 recalculates the arrangement distribution of the microphones based on the corrected input condition. As shown in FIG. 10, the processor 12 displays the recalculated arrangement distribution of the microphones. At the time of recalculation, the processor 12 may specify the number of acoustic devices and recalculate an arrangement that can cover the largest area among the restrictions on the number. Accordingly, the user can easily know the optimal arrangement within a certain budget range and the prediction of the performance in that case as a new customer experience.

Accordingly, the user can improve design accuracy by correcting the input condition with reference to the result for the condition input first. The GUI may display a list of input conditions, microphones, acoustic devices, and an arrangement diagram or a cover area diagram of the microphones on the result output screen. The arrangement diagram or the cover area diagram can be easily switched by a user operation. The arrangement diagram or the cover area diagram may be switched to a block diagram.

### Modification 1

The processor 12 according to Modification 1 obtains a reflected sound distribution in an acoustic space. The processor 12 further obtains an arrangement distribution of microphones using the reflected sound distribution as an input. The reflected sound distribution includes information on the position where the reflected sound is generated and the sound pressure. The position of the reflected sound is obtained based on the position of the sound source and the position of the wall surface, and the position of the noise source and the position of the wall surface.

The processor 12 receives the material (board, glass, concrete, tile, carpet, rock wool sound absorbing board, or the like) of the wall surface of the acoustic space by the GUI. When the information processing device 1 includes a camera, the processor 12 may estimate the material of the wall surface by image recognition processing based on an image acquired by the camera. The processor 12 estimates the sound pressure and distribution of the reflected sound based on the sound absorption coefficient corresponding to the shape of the acoustic space and the material of the wall surface. At this time, the processor 12 may obtain an SN ratio for each direction at any microphone position based on a positional relation between the microphone and the sound source, the noise source, and the reflected sound, calculate a non-spherical sound collection possible range using the SN ratio for each direction as an input argument, and calculate an optimum arrangement distribution of the microphones. The optimal arrangement distribution of the microphones may be defined as "an arrangement that can cover a necessary sound collection area with a minimum number of microphones", or may be defined as "an arrangement that can cover a necessary sound collection area with a microphone of the lowest cost" by receiving price information for each microphone.

The processor 12 regards the reflected sound calculated in this way as a noise source. The processor 12 inputs the received acoustic space, the position of the sound source, and the position of the noise source to the trained model, and obtains the corresponding arrangement distribution of the microphones.

Accordingly, the user can easily know a more optimal arrangement of the microphones in consideration of the reflected sound of the room as a new customer experience.

### Modification 2

The processor 12 according to Modification 2 receives information on the directivity of the microphone, and further calculates the arrangement distribution of the microphones based on the information on the directivity of the microphone.

In this case, as a training stage, the server acquires a large number of SN ratio distributions when a microphone having a certain input characteristic and certain directivity is provided in a certain acoustic space. The server trains the predetermined model of the relation among the arrangement distribution of the microphones, the microphone directivity, and the SN ratio distribution using a predetermined algorithm.

The processor 12 acquires the trained model trained as described above from the server via the communication unit 11. As an execution stage, the processor 12 inputs the received acoustic space, the SN ratio distribution in the acoustic space, and the information on the directivity of the microphone by the trained model, and obtains the corresponding arrangement distribution of the microphones.

Accordingly, the user can easily know a more optimal arrangement of the microphones in consideration of the directivity as a new customer experience.

### Modification 3

The processor 12 according to Modification 3 receives the number, positions, and input characteristics of the fixed microphones fixed in advance in the room, and further calculates a necessary arrangement distribution of the microphones based on the number, positions, and input characteristics of the fixed microphones.

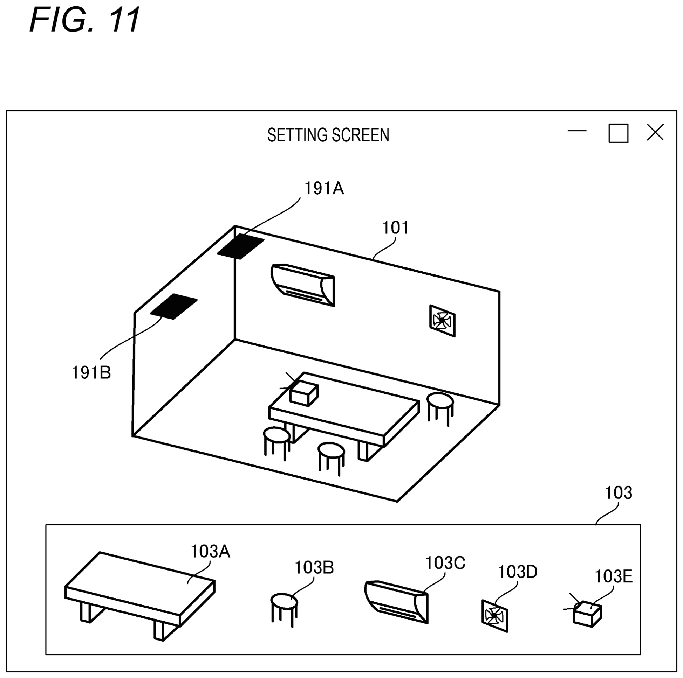

FIG. 11 is a diagram showing an example of a screen (GUI) of an application program according to Modification 3. The user further sets the number and positions of the fixed microphones in the acoustic space interface 101. In the example in FIG. 11, the processor 12 receives two fixed microphones 191A and 191B provided on the ceiling in the acoustic space via the acoustic space interface 101.

The processor 12 inputs the received acoustic space and the target SN ratio distribution in the acoustic space by the trained model using the received input characteristics of the fixed microphones 191A and 191B as constraint conditions, and obtains the corresponding arrangement distribution of the microphones.

The processor 12 displays the microphones necessary for obtaining a target SN ratio distribution in addition to the fixed microphones 191A and 191B.

Accordingly, as a new customer experience, the user can easily know the optimum arrangement of the microphones in the set acoustic space in consideration of the microphones fixed in advance as equipment in the room.

### Modification 4

The processor 12 according to Modification 4 receives a position where the microphone cannot be provided in the acoustic space, and further calculates the arrangement distribution of the microphones based on the non-installable position.

For example, in an actual room, a microphone cannot be provided on a glass surface such as a window. The user designates a place (a non-installable position) where the microphone in the actual room cannot be provided by the GUI.

The processor 12 obtains the arrangement distribution of the microphones by the trained model using the received non-installable position as a constraint condition. Alternatively, the processor 12 may further receive the position of the speaker in the acoustic space. A microphone cannot be provided at the position of the speaker. The processor 12 may further obtain the arrangement distribution by adding a constraint condition that the position of the speaker is a non-installable position.

Accordingly, the user can easily know, as a new customer experience, the optimum arrangement of the microphones in consideration of the position where the microphone cannot be provided in the set acoustic space.

### Modification 5

The processor 12 according to Modification 5 records the calculated arrangement distribution, receives information on the microphone provided in the actual acoustic space, compares the recorded arrangement distribution at the time of design with the information on the microphone, and outputs a comparison result.

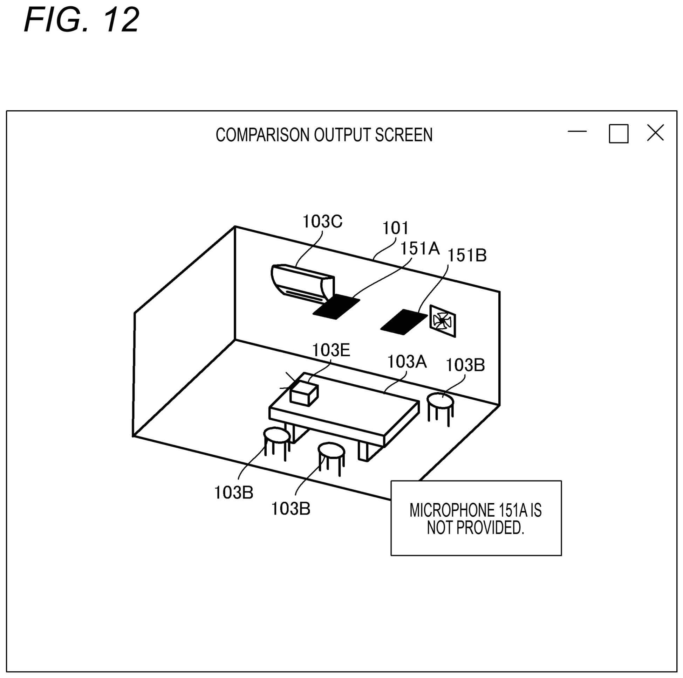

For example, the processor 12 records the calculated arrangement distribution in the flash memory 14. The processor 12 is connected to a microphone provided in the actual acoustic space and receives information such as a model name of the microphone. For example, the processor 12 compares the number of microphones in the calculated arrangement distribution with the number of microphones based on the acquired information on the microphone. Alternatively, the processor 12 may compare the model name of the microphone in the calculated arrangement distribution with the model name of the microphone based on the acquired information on the microphone. When the number of microphones in the calculated arrangement distribution is different from the number of microphones in the recorded arrangement distribution at the time of design, or when the model name of the microphone in the calculated arrangement distribution is different from the model name of the microphone based on the acquired information on the microphone, the processor 12 displays the information on the microphone not provided on the comparison output screen as shown in FIG. 12.

Accordingly, the user can know before use that a microphone of wrong specification is provided, the microphones are insufficient, or an extra microphone is provided.

The past arrangement distribution described above may be an arrangement distribution when the microphone is first provided in the acoustic space. In this case, when a failure occurs after actual use, the processor 12 compares the arrangement distribution when the microphone is first provided with the information on the currently provided microphone, and outputs a comparison result. If the arrangement distribution when the microphone is first provided matches the information on the currently provided microphone, the user can understand that the microphone is provided according to the specification at the time of installation but a failure occurs after use due to a product malfunction or the like. Therefore, the user can easily know the cause of a failure, whether the failure is caused by the microphone not being provided according to the specifications at the time of installation of the microphone, whether the wiring is changed after use, or whether the failure is caused by a product malfunction or the like. In a case in which the acoustic characteristics of the installation space are measured when the microphone is first provided, it is possible to easily know whether there is a failure due to a change in the characteristics of the installation space by comparing the acoustic characteristics with the result of re-measurement when a problem occurs. In a case in which the operation is checked according to a certain sequence when the microphone is first provided, it is possible to easily know a failure operation by comparing the operation with the result of the re-operation check. Accordingly, even a user who does not have acoustic technology or acoustic knowledge can distinguish the cause of the occurrence of a failure.

For example, the calculation result does not need to be displayed on the display 15 of the information processing device 1. The processor 12 may output the calculation result to another device.

For example, the processor 12 may store a large number of pieces of data related to a plurality of acoustic spaces and a plurality of arrangement distributions as past calculation results in the flash memory 14, the RAM 13, a server (not shown), or the like in association with each other as a database. In this case, the processor 12 refers to the database and obtains an arrangement distribution corresponding to the received acoustic space. Alternatively, by referring to and reading the arrangement distribution of the microphones corresponding to the input condition of the desk 103A, the chair 103B, or the like from the database, the processor 12 can obtain the arrangement distribution of the microphones. In this case, the processor 12 can obtain the arrangement distribution of the microphones without using the model described above.

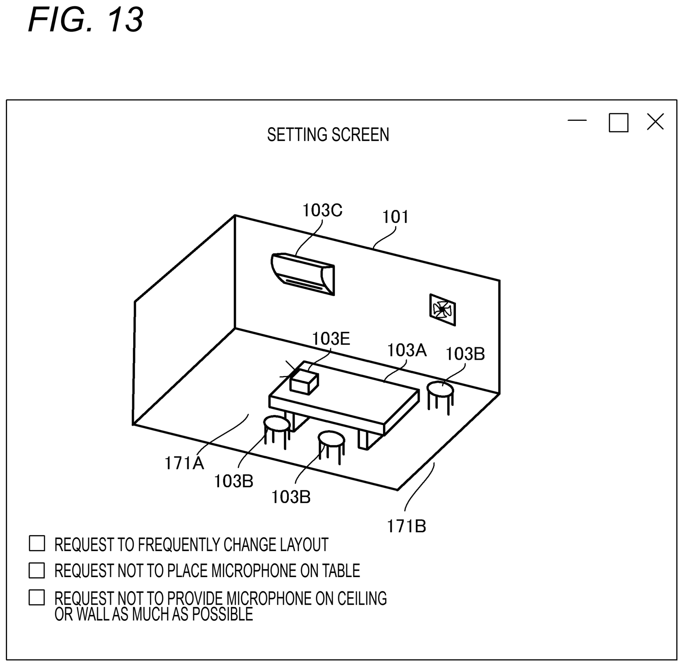

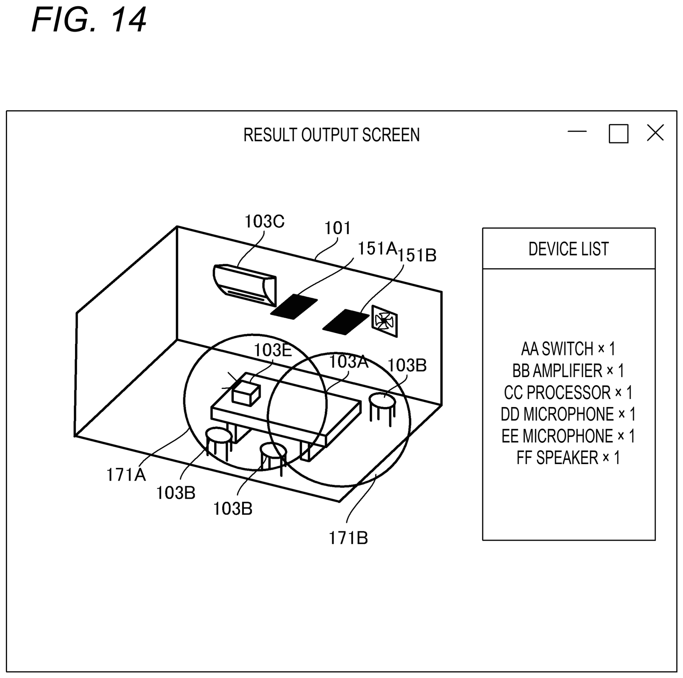

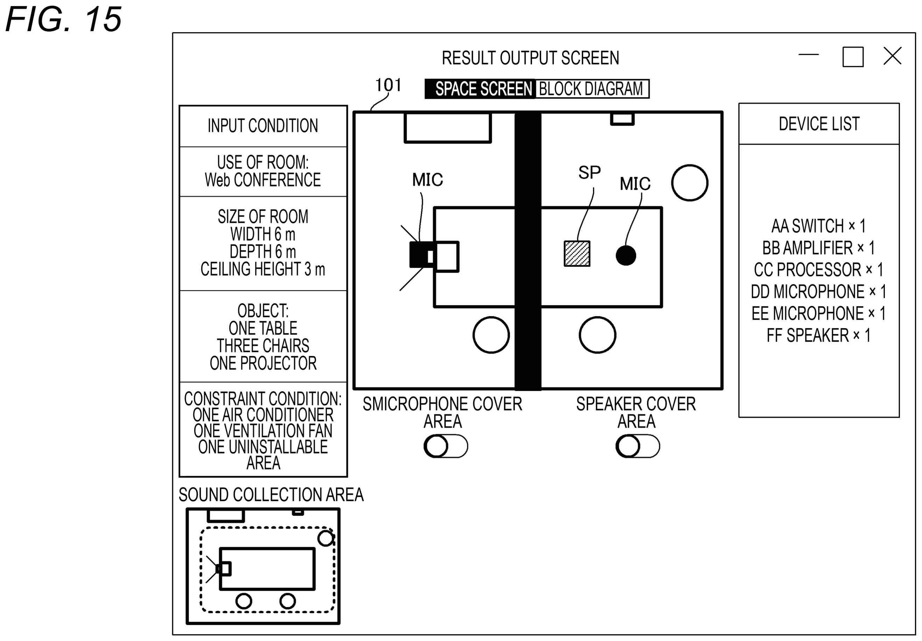

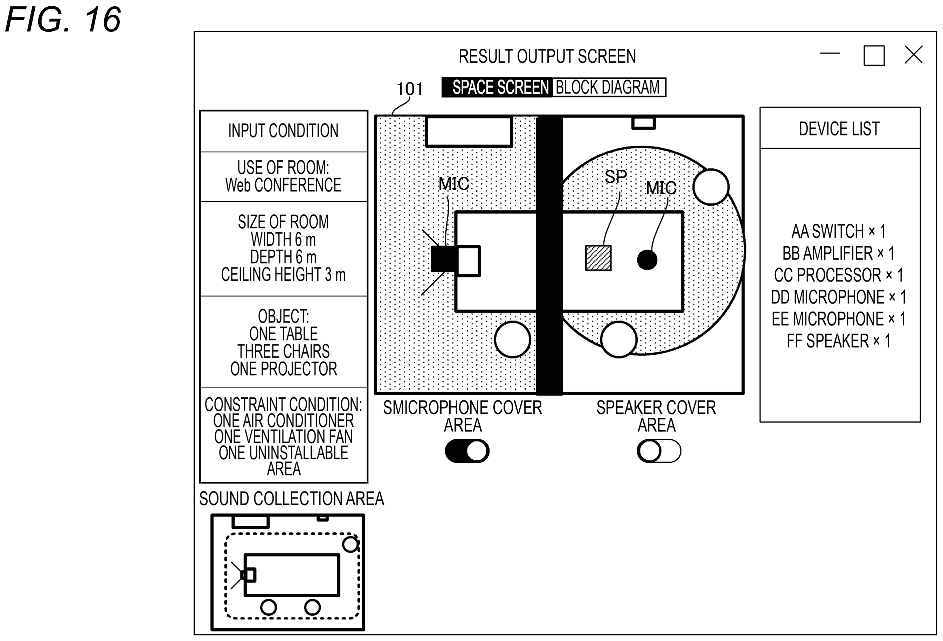

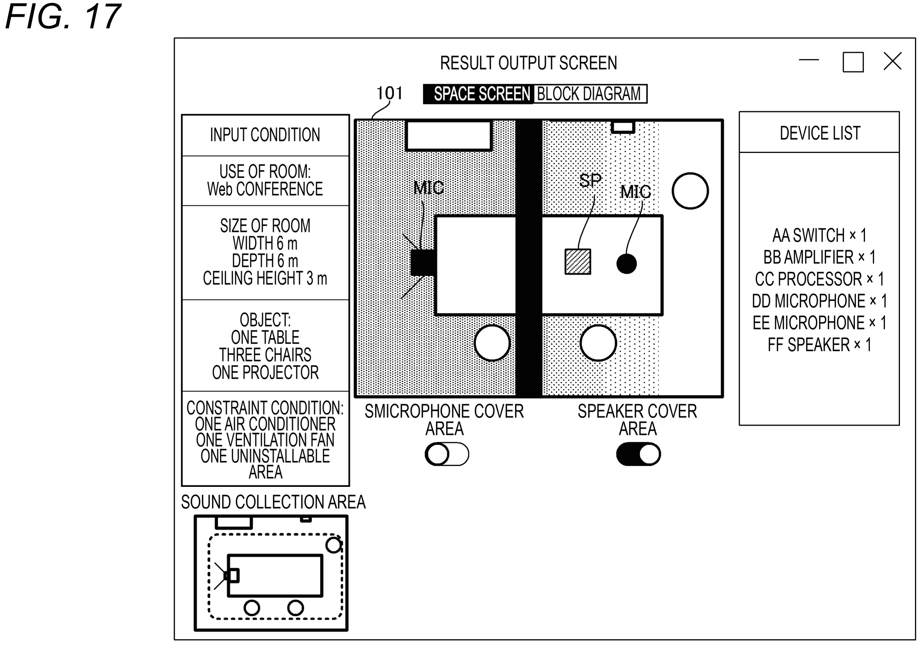

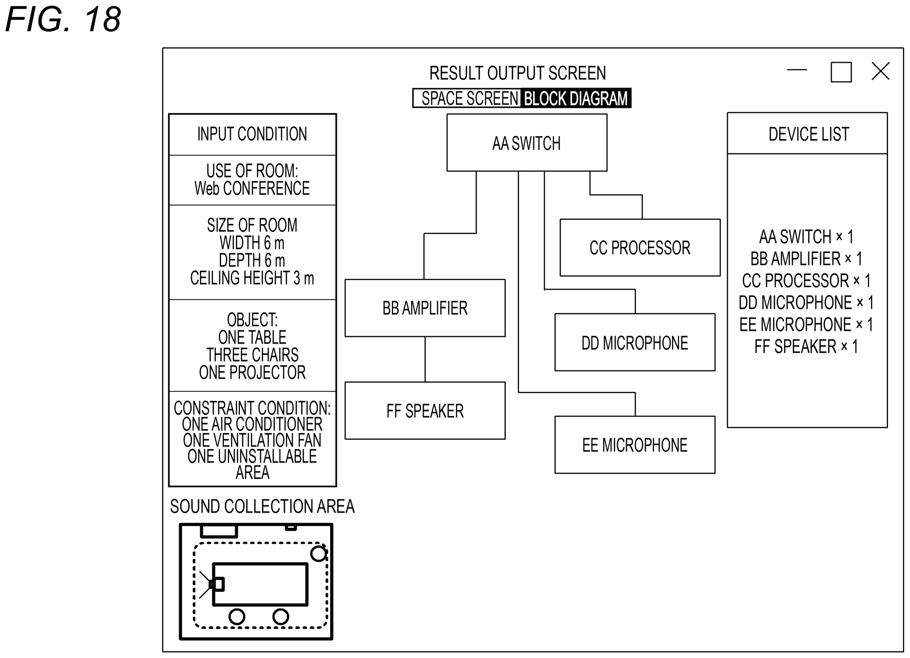

As shown in FIG. 13, the processor 12 may receive a request (for example, a request to frequently change a layout, a request not to place a microphone on a table, or a request not to provide a microphone on a ceiling or a wall as much as possible) for an acoustic space to be formed, and select a model (a product number or the like) of the microphone based on the request. In this case, the processor 12 can determine the product numbers and the number of optimum microphones. Similarly, the processor 12 may receive the setting of not only the microphone but also the target sound emission area and select the arrangement distribution and the product number of the speaker. The processor 12 can determine the product numbers and the number of microphones and speakers, and can further determine the number of ports and the amount of power required for peripheral devices such as a processor, an amplifier, and a network switch for necessary audio signal processing. The processor 12 may select, from among the predetermined product numbers of the processor, the amplifier, and the network switch for the audio signal processing, a product number and the number satisfying the required number of ports and amount of power. Accordingly, as a new customer experience, even a user who does not have product knowledge of the acoustic device, know-how of the system design in the acoustic space, or the like can easily design the entire system according to a request. As shown in FIG. 14, the processor 12 may display a list of the product numbers and the numbers of devices required for the entire system. As shown in FIG. 15, the processor 12 may display an arrangement diagram of microphones and speakers in the acoustic space. As shown in FIG. 16, the processor 12 may display a cover area diagram of the microphone in the acoustic space. When receiving an operation of a switch icon of a "microphone cover area" on the result output screen in FIG. 15, the processor 12 displays the cover area diagram of the microphone shown in FIG. 16. As shown in FIG. 17, the processor 12 may display a cover area diagram of the speaker. When receiving an operation of a switch icon of a "speaker cover area" on the result output screen in FIG. 15, the processor 12 displays the cover area diagram of the speaker shown in FIG. 17. When receiving operations of the switch icons of both the "microphone cover area" and the "speaker cover area" on the result output screen in FIG. 15, the processor 12 may display the cover areas of the microphone and the speaker in an overlapping manner. As shown in FIG. 18, the processor 12 may display a block diagram of the devices necessary for the entire system. In this case, the processor 12 may switch the display of the arrangement diagram of the microphone and the speaker in the acoustic space and the display of the block diagram by receiving the selection of the tab displayed on the upper portion of the result output screen. The processor 12 may output an estimate of the purchase price of the devices necessary for the entire system.

The processor 12 may receive an instruction to add or delete a desired microphone or speaker from the user on the result output screen, or may receive movement by a drag and drop operation. In this case, in response to the instruction to add or delete a microphone or a speaker, the processor 12 may change the list of the product numbers and the number of devices necessary for the entire system, the block diagram, the arrangement diagram of the microphone and the speaker in the acoustic space, the cover area diagram of the microphone and the speaker in the acoustic space, and the estimate of the purchase prices of the devices necessary for the entire system, and display a change result in real time.

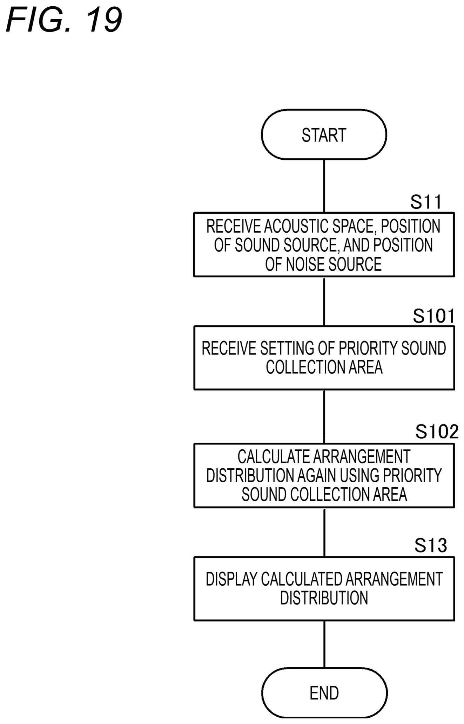

FIG. 19 is a flowchart showing an operation of a display method executed by the processor 12. The operation common to that in FIG. 2 is denoted by the same reference sign, and the description thereof is omitted.

After receiving the acoustic space, the position of the sound source, and the position of the noise source in S11, the processor 12 further receives the setting of the priority sound collection area in the acoustic space (S101). The priority sound collection area is, for example, an area in which an important participant in a conference such as a company president is present. In this example, the priority sound collection area is set to have a higher target SN ratio than other areas. For example, the target SN ratio of the priority sound collection area is higher than the target SN ratios of the other areas by approximately 10 dB.

The processor 12 inputs the received acoustic space and the target SN ratio distribution by, for example, a predetermined trained model, and obtains the corresponding arrangement distribution of the microphones (S102). The processor 12 displays the microphone required to obtain the target SN ratio distribution as the calculation result (S13).

Accordingly, as a new customer experience, even a user who does not have know-how or the like of the system design in the acoustic space can obtain an optimum arrangement distribution of the microphones in consideration of the area where an important participant is present in a conference.

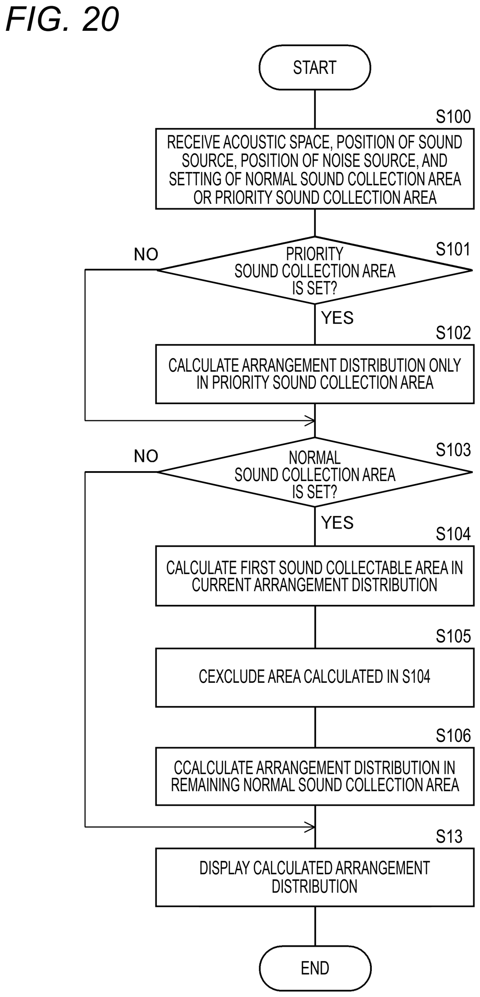

FIG. 20 is a flowchart showing an operation of a display method executed by the processor 12. The operation common to that in FIG. 19 is denoted by the same reference sign, and the description thereof is omitted.

In the example in FIG. 20, when first receiving the acoustic space, the position of the sound source, and the position of the noise source, the processor 12 further receives the setting of the normal sound collection area or the priority sound collection area (S100). As described above, the priority sound collection area is, for example, an area in which an important participant in a conference such as a company president is present. The user sets the priority sound collection area using the GUI. The normal sound collection area corresponds to, for example, the target sound collection range (the rectangular region M) shown in FIG. 6. For example, the user moves a mouse cursor to a certain position in the acoustic space interface 101 using the GUI in FIG. 6, clicks the mouse, and performs a drag operation to set the normal sound collection area.

The processor 12 determines whether the priority sound collection area is set (S101). When it is determined that the priority sound collection area is set (YES in S101), the processor 12 obtains a first arrangement distribution in which the arrangement distribution is calculated using only the priority sound collection area (S102). When it is determined that the priority sound collection area is not set (NO in S101), the processor 12 proceeds to S103 without performing the processing in S102.

Next, the processor 12 determines whether the normal sound collection area is set (S103). When it is determined that the normal sound collection area is set (YES in S103), the processor 12 calculates a first sound collection area (S104). The first sound collection area is an area in which sound can be collected in the currently calculated arrangement distribution. For example, the processor 12 calculates an area satisfying a target SN ratio in the arrangement distribution calculated in S102 as the first sound collection area.

Next, the processor 12 obtains a second sound collection area excluding the first sound collection area calculated in S104 from the normal sound collection area (S105). Then, the processor 12 obtains the second arrangement distribution in which the arrangement distribution is calculated in the remaining normal sound collection area (the second sound collection area) (S106).

When it is determined that the normal sound collection area is not set (NO in S103), the processor 12 proceeds to S103 without performing the processing in S104 to S106.

The processor 12 displays the calculated result (S13). Accordingly, the processor 12 calculates an appropriate arrangement distribution according to the setting of the normal sound collection area and the priority sound collection area input by the user.

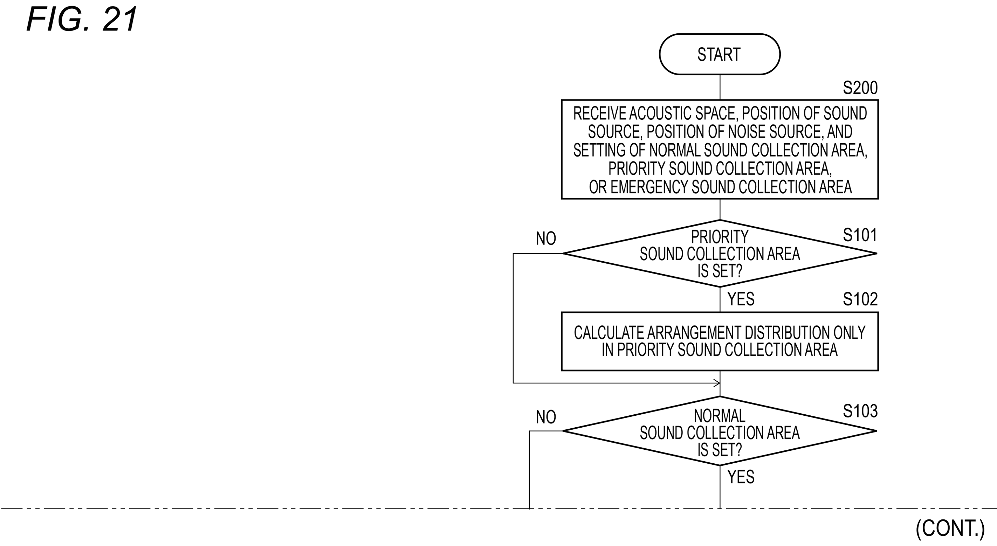

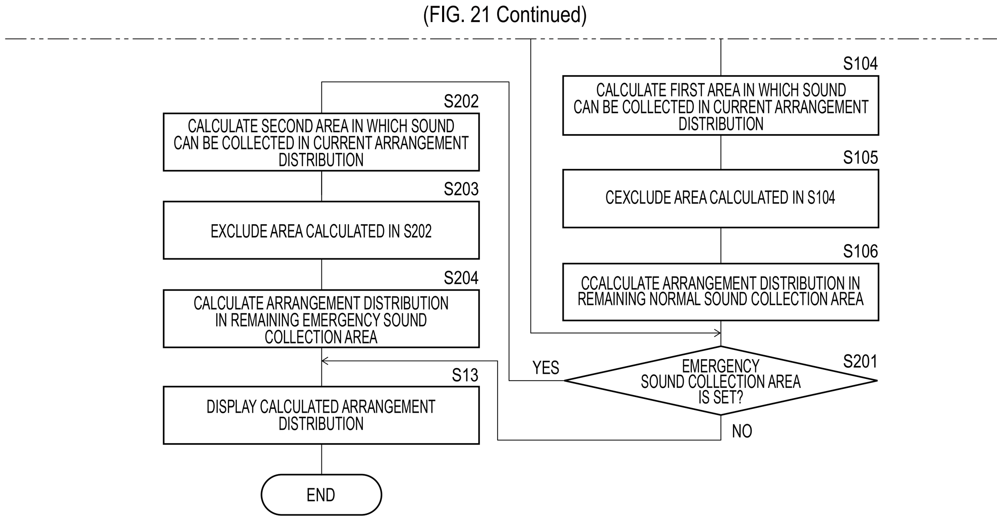

FIG. 21 is a flowchart showing an operation of a display method executed by the processor 12. The operation common to that in FIG. 20 is denoted by the same reference sign, and the description thereof is omitted.

In the example in FIG. 21, when receiving the acoustic space, the position of the sound source, and the position of the noise source, the processor 12 further receives the setting of the normal sound collection area, the priority sound collection area, or the emergency sound collection area (S200). The emergency sound collection area is an area in which sound does not always need to be collected in a conference. The emergency sound collection area corresponds to a position corresponding to another area when one large room is divided into a main area and the other area by, for example, a sliding wall.

After the processing in S106, or when it is determined that the normal sound collection area is not set in S103 (NO in S103), the processor 12 determines whether the emergency sound collection area is set (S201). When it is determined that the emergency sound collection area is set (YES in S201), the processor 12 calculates a second sound collection area (S202). The second sound collection area is an area in which sound can be collected in the currently calculated arrangement distribution. For example, the processor 12 calculates an area satisfying a target SN ratio in the arrangement distribution calculated in S102 or S106 as the second sound collection area.

Next, the processor 12 obtains a third sound collection area excluding the second sound collection area calculated in S202 from the emergency sound collection area (S203). Then, the processor 12 obtains the third arrangement distribution in which the arrangement distribution is calculated in the remaining emergency sound collection area (the third sound collection area) (S204). When it is determined that the emergency sound collection area is not set (NO in S201), the processor 12 proceeds to S13 without performing the processing in S202 to S204.

The processor 12 displays the calculated result (S13). Accordingly, the processor 12 calculates an appropriate arrangement distribution according to the setting of the normal sound collection area, the priority sound collection area, and the emergency sound collection area input by the user.

In the example in FIG. 21, an example of calculating the first arrangement distribution, the second arrangement distribution, and the third arrangement distribution is shown. Alternatively, the processor 12 may calculate the first arrangement distribution alone, the second arrangement distribution alone, or the third arrangement distribution alone. The processor 12 may calculate the second arrangement distribution and the third arrangement distribution without calculating the first arrangement distribution, may calculate the first arrangement distribution and the third arrangement distribution without calculating the second arrangement distribution, or may calculate the first arrangement distribution and the second arrangement distribution without calculating the third arrangement distribution.

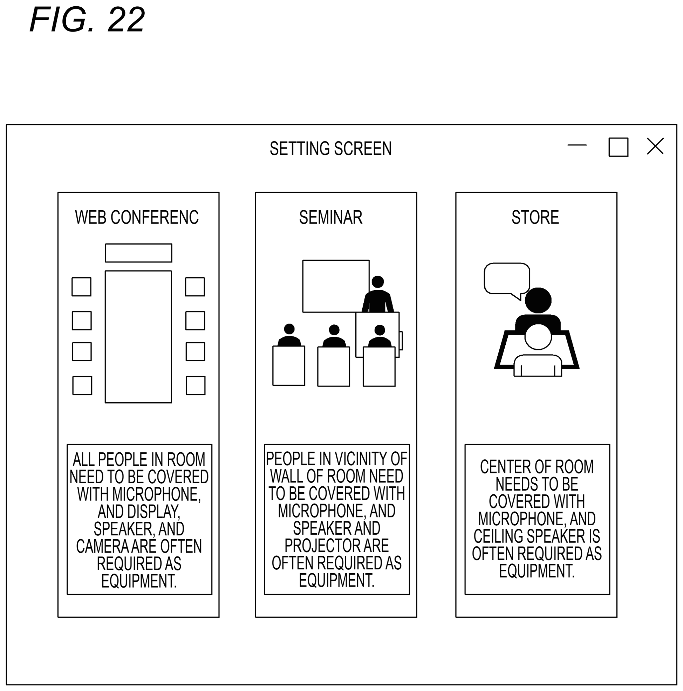

FIG. 22 is a diagram showing an example of the screen (GUI) of the application program. The processor 12 receives the acoustic space via a simple setting screen as shown in FIG. 22. The processor 12 displays templates "WEB conference", "seminar", and "store" of a plurality of (three in FIG. 22) acoustic spaces as acoustic spaces desired to be constructed by the user. The processor 12 receives selection of any acoustic space from the templates of the plurality of acoustic spaces.

For example, the processor 12 stores a large number of pieces of data related to the plurality of acoustic spaces and a plurality of arrangement distributions as past calculation results in the flash memory 14, the RAM 13, a server (not shown), or the like in association with each other as a database. The processor 12 refers to the database and calculates an arrangement distribution corresponding to the received acoustic space.

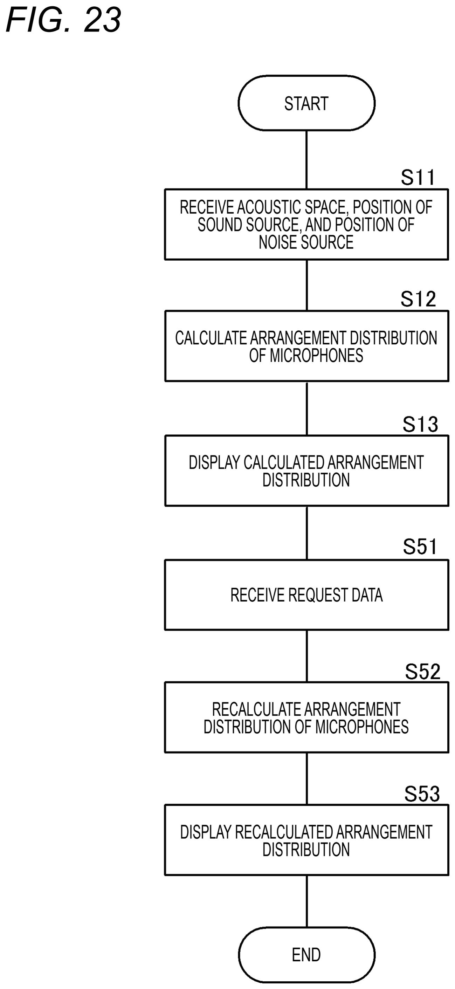

Accordingly, the processor 12 can easily receive a request for an acoustic space from the user. Then, by displaying the arrangement distribution calculated based on the simple request and then receiving a detailed request for the sound environment from the user, the processor 12 calculates the arrangement distribution. FIG. 23 is a flowchart showing an operation of a display method executed by the processor 12. The operation common to that in FIG. 2 is denoted by the same reference sign, and the description thereof is omitted.

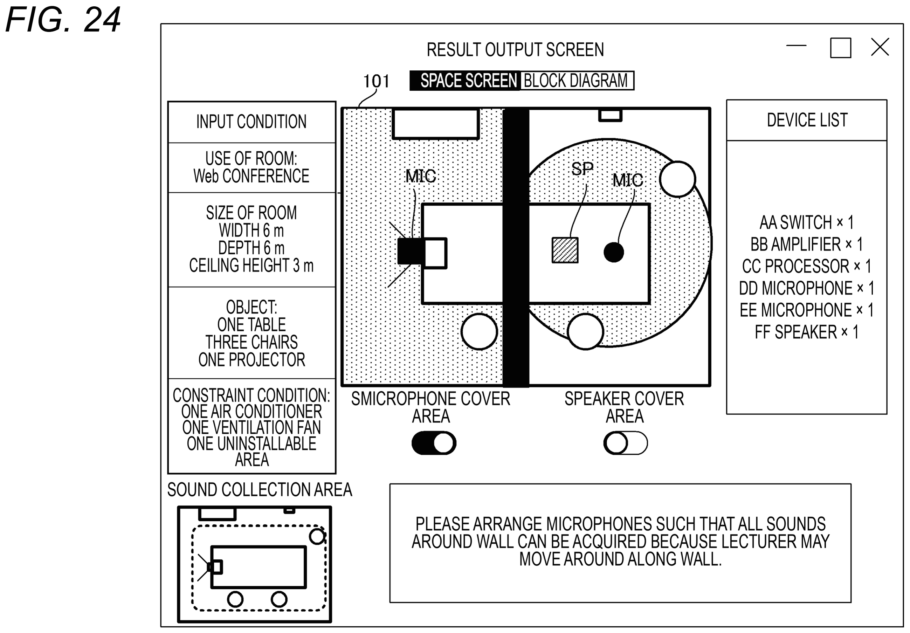

After displaying the calculated arrangement distribution (after S13), the processor 12 receives request data related to a request for the sound environment of the user for the calculated arrangement distribution (S51). For example, as shown in FIG. 24, the processor 12 displays a cover area diagram of the microphone in the acoustic space as the arrangement distribution, and further displays a reception box of the request data in the screen. The user inputs text data as the request data to the reception box. In the example in FIG. 24, the user inputs, as the text data, "please arrange the microphones such that all sounds around the wall can be acquired because the lecturer may move around along the wall". The processor 12 obtains information (keyword) related to the request data of the sound environment of the user included in the received text data by a natural language processing model. The natural language processing model is a model trained to output a keyword of the request data corresponding to a sentence using a large number of data sets including a combination of the text data and the keyword of the request data. The processor 12 inputs the received sentence to the natural language processing model and acquires the corresponding request data.

Then, the processor 12 recalculates the arrangement distribution of the microphones (S52), and displays the recalculated arrangement information (S53). In particular, in the processing in S52, the processor 12 prepares a trained model trained to output the arrangement of the acoustic device such as a microphone for the received data, inputs the request data to the trained model, and acquires the arrangement information of the corresponding acoustic device.

Accordingly, even a user who does not have product knowledge of the acoustic device, know-how of the system design in the acoustic space, or the like can design the entire system more easily and highly accurately only by first making a simple request by the GUI and making a request by text input for the calculated arrangement distribution.

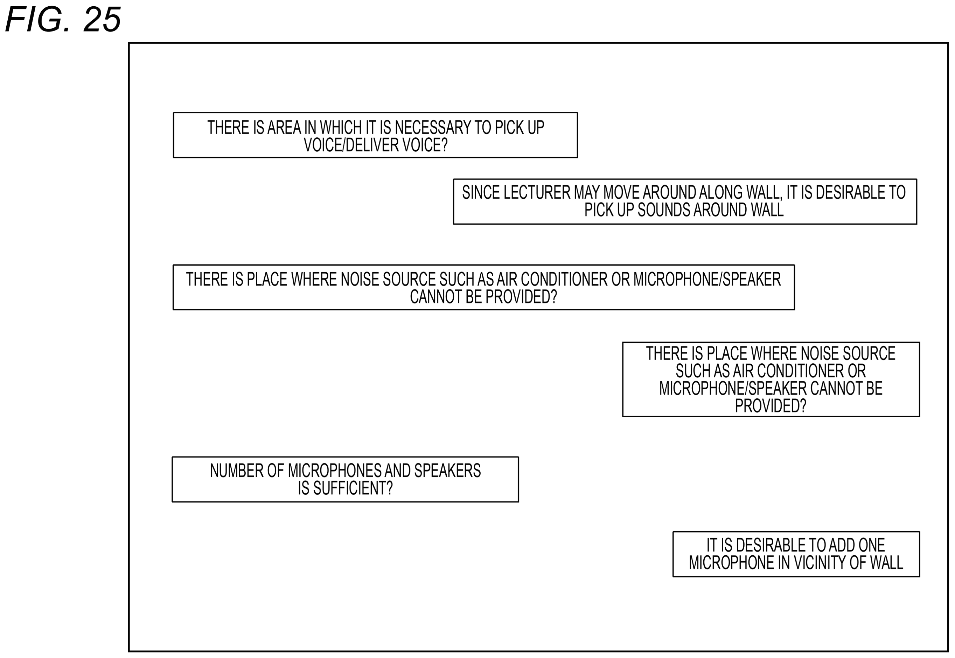

FIG. 25 is a diagram showing an example of a GUI using an interactive natural language processing model. The GUI shown in FIG. 25 receives the request data using the interactive natural language processing model. The GUI asks for a request for the sound environment, and the user inputs an answer to the question.

The processor 12 receives the text data related to the request data using the interactive natural language processing model, inputs the text data of the request data to the trained model described above, and acquires the arrangement information of the corresponding acoustic device.

Accordingly, the user can design the entire system more easily and highly accurately only by answering the question.

The arrangement distribution of the acoustic devices may include connection information between the plurality of acoustic devices. The processor 12 may prepare a trained model trained to output the connection information between the plurality of acoustic devices as the arrangement distribution corresponding to the request data, input the received request data to the trained model, and acquire the corresponding connection information. The processor 12 may display the calculated connection information on the GUI.

Accordingly, the user can connect the plurality of acoustic devices by viewing the connection information displayed on the GUI, and can easily perform the connection of the acoustic devices without making a mistake in connection.

The arrangement distribution of the acoustic devices may include information on parameters of signal processing executed by the acoustic devices. The processor 12 may prepare a trained model trained to output the information on parameters of signal processing executed by the acoustic device as the arrangement distribution corresponding to the request data, input the received request data to the trained model, and acquire information on the corresponding parameters. The processor 12 may display information on the calculated parameters on the GUI.

Accordingly, the user can easily set the parameters of the signal processing executed by the acoustic device by viewing the displayed signal processing parameters.

The processor 12 may receive current information indicating a current installation state of the acoustic device. The processor 12 may calculate correction information for the current information as the arrangement distribution of the acoustic devices. The correction information includes all of information indicating a wrong portion for the current information, information indicating a result of correct connection, and update information obtained by adding new information to the current information.

Accordingly, the user can easily correct the setting of the acoustic device by viewing the displayed correction information.

### Another Example Related to Correction Operation of Input Condition

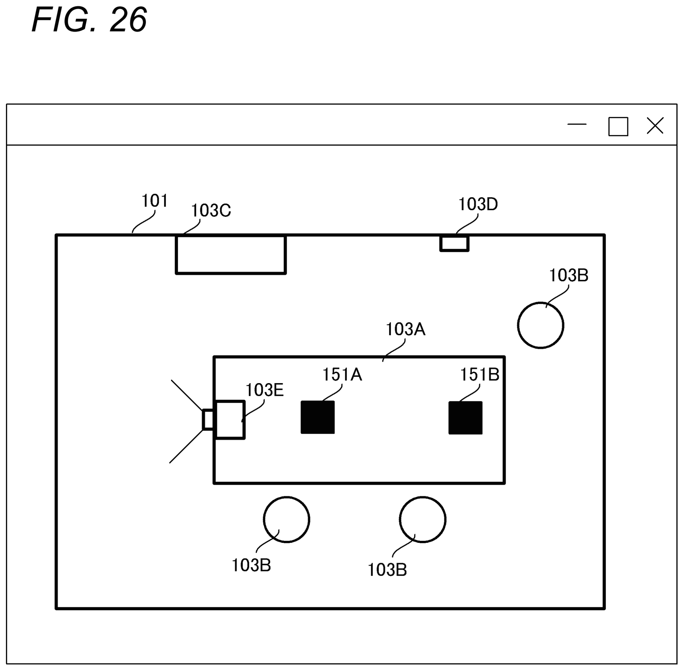

FIG. 26 is a view (a plan view) showing an example of the input condition correction operation screen. Each of the plurality of objects includes information on an installation condition. The information on an installation condition is stored in, for example, the flash memory 14.

When the correction of the input condition is received, in conjunction with the correction of the position of at least one object of the plurality of objects, the processor 12 corrects the position of another object based on the information on an installation condition.

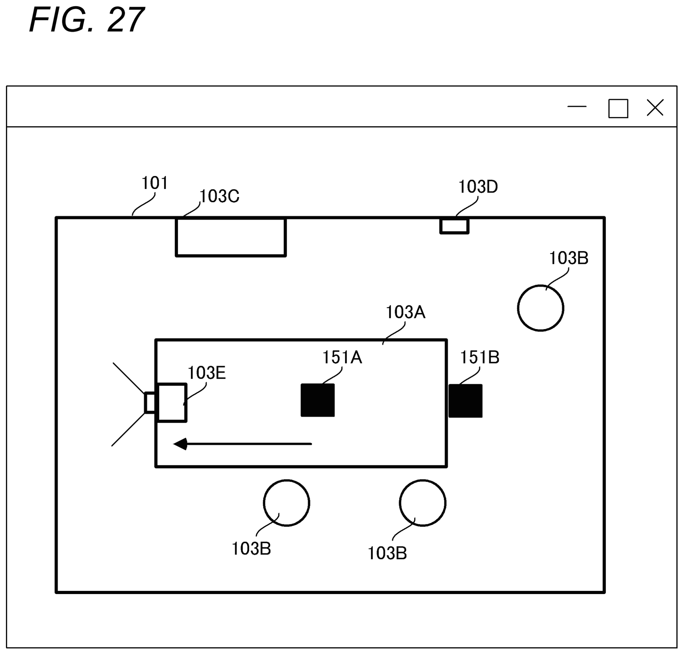

For example, as shown in FIG. 27, the user moves the object icon of the desk 103A leftward in the acoustic space interface 101 by a predetermined amount by dragging and dropping the object icon. At this time, the processor 12 refers to the information on an installation condition of the object on the desk 103A.

The information on an installation condition is defined by a table in which a relation between a plurality of objects is defined in advance. The table specifies, for example, the projector 103E, which is an object provided on the upper surface of the desk 103A, as an object to be linked with the object of the desk 103A. Alternatively, the information on an installation condition may be defined based on a trained model in which a relation between a plurality of objects is trained by a DNN in advance. As a training stage, a computer (for example, a server) that generates a trained model acquires a large number of data sets indicating a correspondence between the relation between a plurality of objects and the information on an installation condition in the actual acoustic space. The server uses the acquired large number of data sets to train a predetermined model using a predetermined algorithm so as to output the information on an installation condition corresponding to the plurality of objects. The algorithm for training the model may be any algorithm. Any machine training algorithm such as a CNN or an RNN can be used as the algorithm. As the execution stage, the processor 12 inputs information on the relation between a plurality of objects designated as the input condition to the trained model to obtain the information on an installation condition of the objects.

The processor 12 moves the projector 103E leftward in the acoustic space interface 101 by a predetermined amount (by the same movement amount as the desk 103A) in conjunction with the correction of the position of the desk 103A based on the information on an installation condition.

Alternatively, the processor 12 may determine a linked object each time. For example, in the object of the desk 103A, for example, information that "the object provided on the desk is to be linked" is recorded. In this case, the processor 12 specifies the projector 103E, which is the object in contact with the upper surface of the desk 103A, as the object to be linked.

Then, the processor 12 may recalculate the arrangement distribution of the acoustic devices based on the corrected input condition. In this case, in conjunction with the position of the corrected object, the position of another object to be corrected is also automatically corrected, and the optimum arrangement distribution of the acoustic devices is calculated again based on the corrected input condition. Therefore, in the arrangement design support method according to the present embodiment, even a user with little knowledge about acoustic design can prevent omission of correction, and a more appropriate arrangement distribution of the acoustic devices can be obtained.

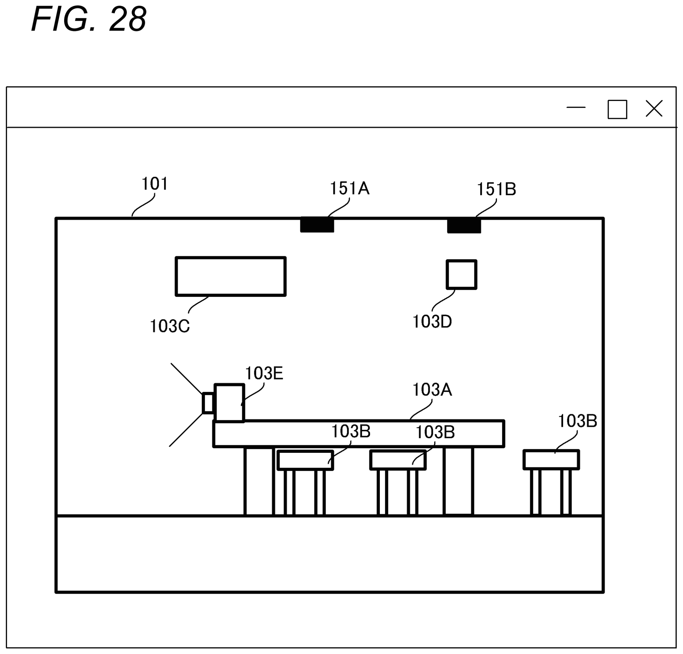

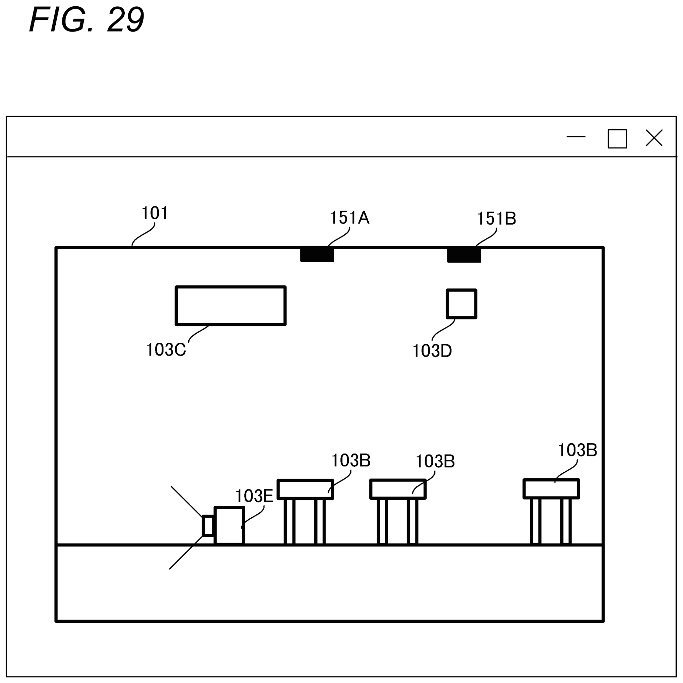

The correction of the input condition includes movement, deletion, addition, or size change of the object. FIG. 28 is a view (an elevation view) showing an example of the input condition correction operation screen. The user deletes the object on the desk 103A by, for example, dragging and dropping an object icon on the desk 103A out of the acoustic space interface 101. At this time, the processor 12 refers to the information on an installation condition of the object on the desk 103A. In the information on an installation condition, the projector 103E is specified as an object to be linked. Therefore, as shown in FIG. 29, the processor 12 moves the projector 103E to the floor surface in the acoustic space interface 101 in conjunction with the correction (the deletion) of the position of the desk 103A.

Accordingly, the processor 12 can prevent an object from being provided in an unrealistic manner, such as causing the projector 103E to float in the air.

The processor 12 may add, for example, an object of the desk 103A into the acoustic space interface 101 in a state in which the projector 103E is provided on the floor surface as shown in FIG. 29. In this case, the processor 12 refers to the information on an installation condition of the object of the desk 103A to be added. In the information on an installation condition, the projector 103E is specified as an object to be linked. Therefore, as shown in FIG. 28, the processor 12 moves the projector 103E onto the desk 103A in conjunction with the correction (the addition) of the position of the desk 103A.

Accordingly, the processor 12 can prevent an unnatural state in which an object to be provided on a desk such as the projector 103E remains provided on the floor surface even when the desk 103A is added.

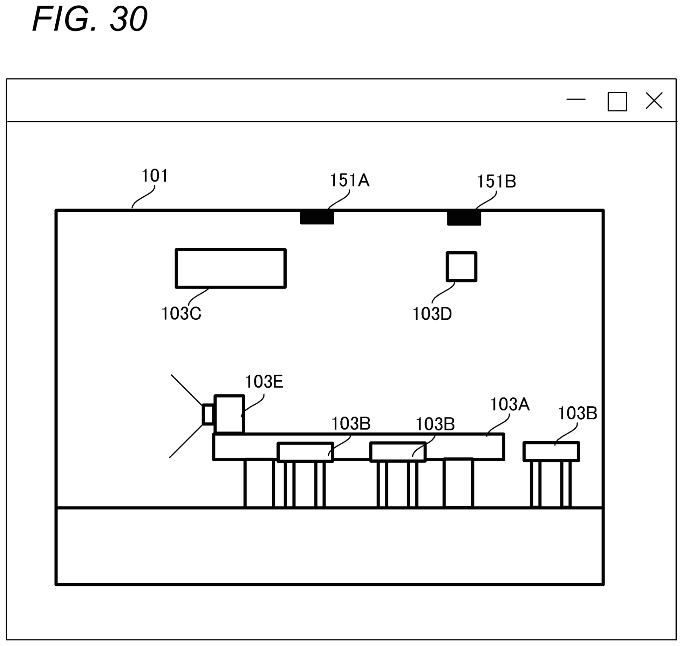

FIG. 30 is a view (an elevation view) showing an example of the input condition correction operation screen. The user changes the height as an example of size change of the object on the desk 103A. When the height of the desk 103A is changed, the position of the desk upper surface of the desk 103A is changed. At this time, the processor 12 refers to the information on an installation condition of the object of the desk 103A whose height has been changed. In the information on an installation condition, the projector 103E is specified as an object to be linked. Therefore, as shown in FIGS. 28 and 30, the processor 12 changes the position of the projector 103E in the height direction to the position of the desk upper surface of the changed desk 103A in conjunction with the change in the height of the desk 103A.

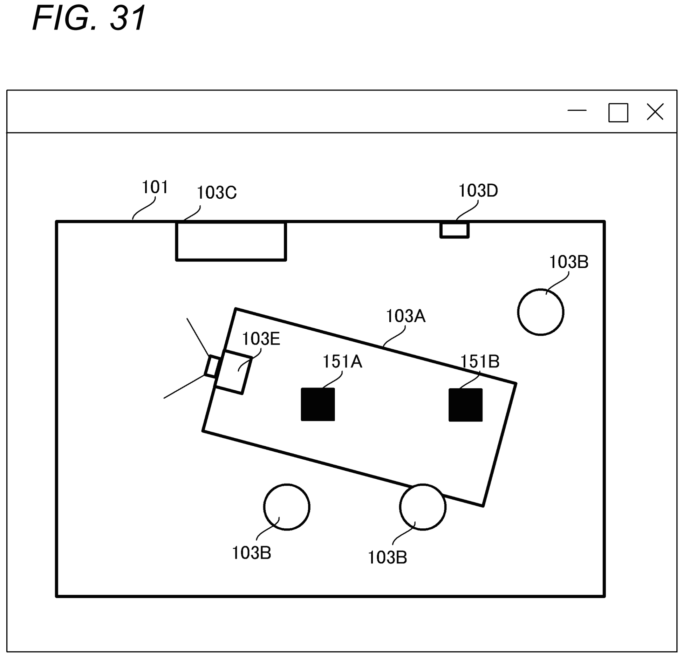

The movement described above includes rotational movement. As shown in FIG. 31, for example, the desk 103A is rotationally moved. The processor 12 may rotationally move the projector 103E about the same rotation axis in conjunction with the rotational movement of the desk 103A.

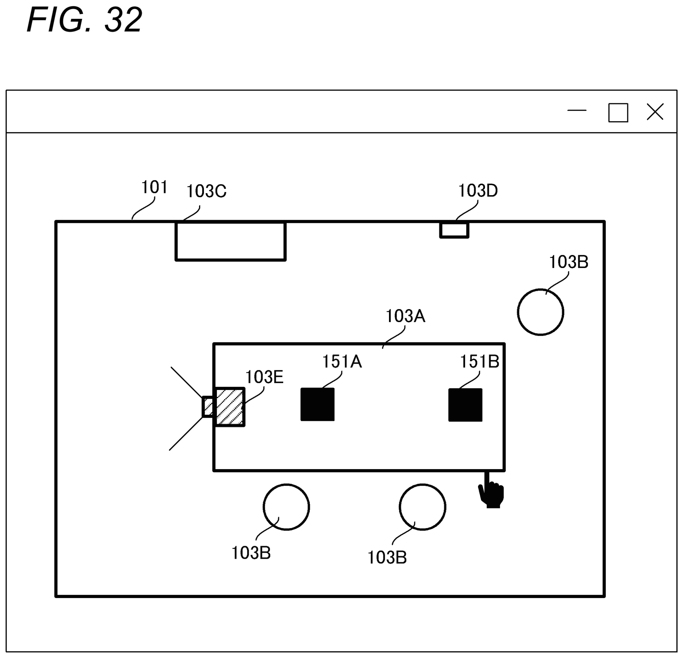

When the selection of the object is received, the processor 12 may notify another object to be linked. For example, as shown in FIG. 32, when the user selects an object of the desk 103A, the processor 12 changes the color of the projector 103E to be linked or blinks the projector 103E to be linked to make the projector 103E stand out. Accordingly, the user can visually recognize the object of which the position is changed in conjunction.

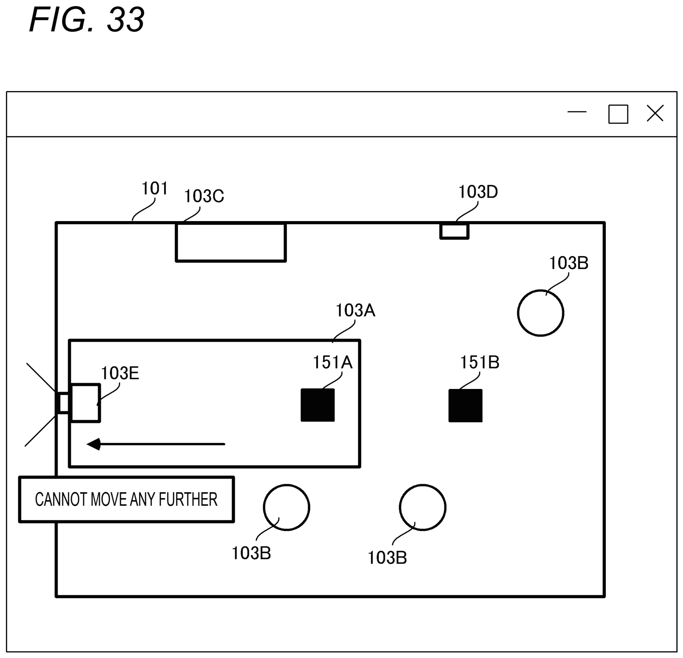

The processor 12 may issue a warning when the installation condition is not satisfied if the position of the other object is corrected in conjunction. For example, as shown in FIG. 33, when the user moves the object of the desk 103A leftward, the processor 12 moves the object of the projector 103E in conjunction. When the left end portion of the projector 103E comes out of the acoustic space interface 101, the processor 12 issues a warning. Accordingly, it is possible to prevent a user with little knowledge about the acoustic design from making an erroneous correction.

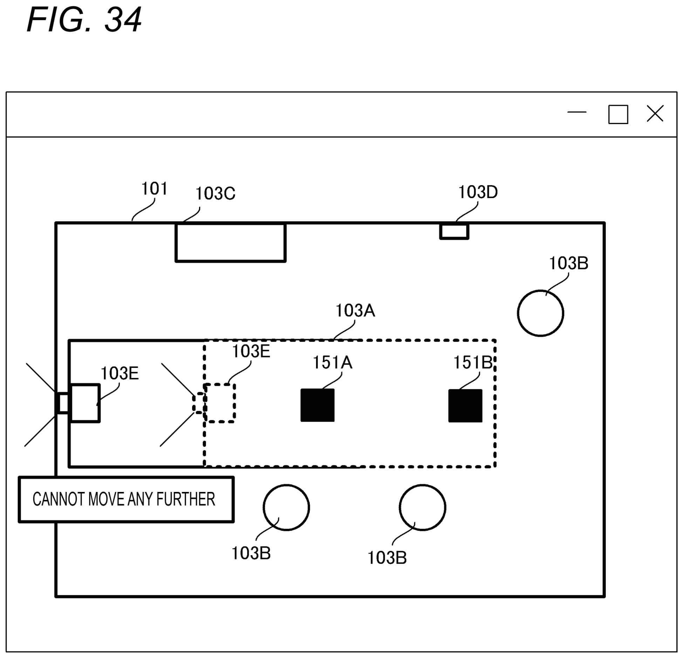

When such an installation condition is not satisfied, the processor 12 may present an input condition for satisfying the installation condition. The input condition for satisfying the installation condition is defined in advance for each object, for example. The input condition for satisfying the installation condition of the projector 103E is defined as, for example, "1 m from the wall surface". Therefore, for example, as shown by a broken line in FIG. 34, the processor 12 displays an image when the projector 103E is moved to a position of 1 m from the wall surface as the input condition for satisfying the installation condition of the projector 103E. At this time, the processor 12 displays an image when the object of the desk 103A is moved in conjunction with the projector 103E.

Accordingly, even a user with little knowledge about the acoustic design can easily know an appropriate correction content.

The input condition for satisfying the installation condition may be defined based on the trained model. As a training stage, a computer (for example, a server) that generates a trained model acquires a large number of data sets indicating a correspondence between the relation between the information on an installation condition and the input condition in the actual acoustic space. The server uses the acquired large number of data sets to train a predetermined model using a predetermined algorithm so as to output the input condition for the information on an installation condition. The algorithm for training the model may be any algorithm. Any machine training algorithm such as a CNN or an RNN can be used as the algorithm.

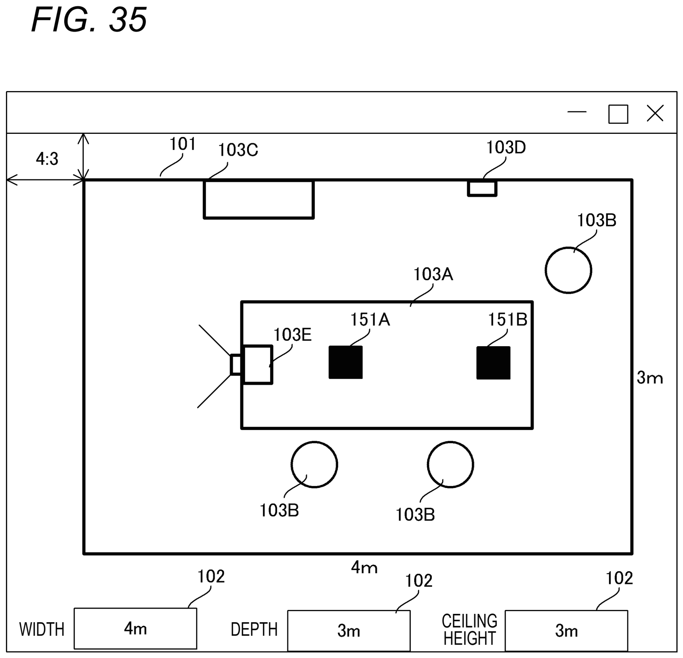

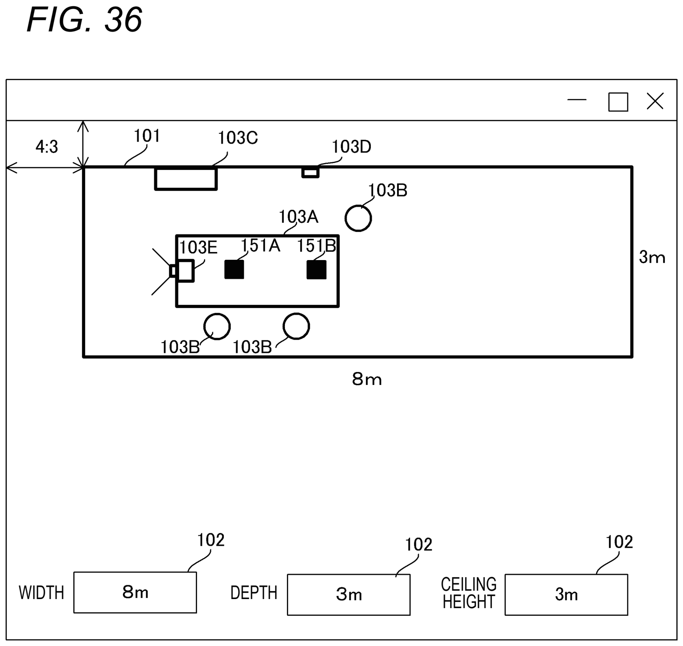

FIGS. 35 and 36 are diagrams showing an example of the GUI for showing a size change of the acoustic space. When receiving a size change of the acoustic space, the processor 12 changes the scale of the acoustic space while maintaining the margin in the GUI.

In the plan view in FIG. 35, a room having a width of 4 m, a depth of 3 m, and a ceiling height of 3 m is designated as the acoustic space. The GUI has a margin of horizontal : vertical = 4:3 at the upper left of the acoustic space interface 101 as an example. The aspect ratio of the margin matches the aspect ratio of the entire GUI.

Here, for example, when the user changes the size of the room, the processor 12 changes the scale such that the acoustic space interface 101 fits in the entire GUI while maintaining the margin in the GUI as shown in FIG. 36. In the example in FIG. 36, since the width of the room is changed to 8 m, the processor 12 changes the scale to 1/2 with respect to the example in FIG. 3. Accordingly, the acoustic space interface 101 is included in the entire GUI. Even if the aspect ratio of the acoustic space interface 101 is changed, the margin in the GUI is maintained at 4:3, which is the aspect ratio of the entire GUI. Therefore, the user can view the entire acoustic space interface 101 even when the scale of the acoustic space interface 101 is changed, and can intuitively grasp the aspect ratio of the acoustic space interface 101 by comparison with the margin in the GUI.

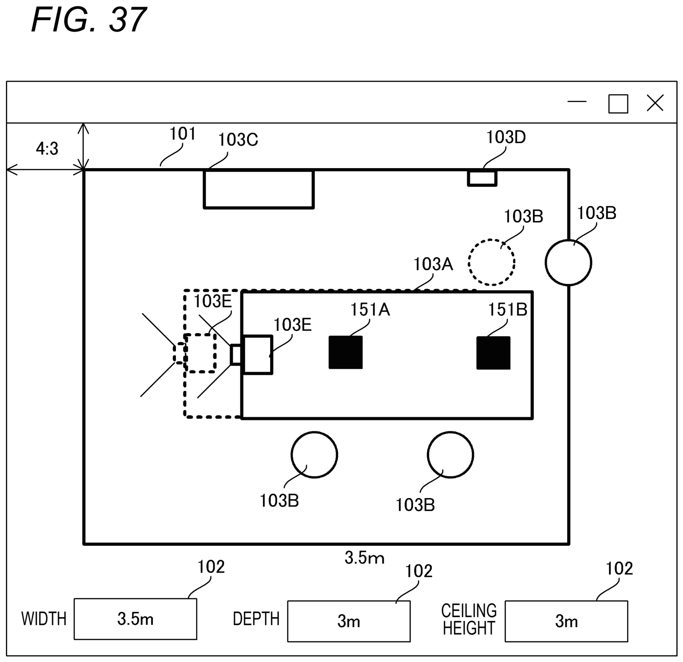

As shown in FIG. 37, when the installation condition is not satisfied as a result of the user changing the size of the room, the processor 12 may present an input condition for satisfying the installation condition or correct the position of the object so as to satisfy the input condition. In the example in FIG. 37, as a result of the correction to the width of 3.5 m as the acoustic space, one on the right side of the chair 103B is outside the acoustic space, and the installation condition is not satisfied. Therefore, the processor 12 moves the position of the chair 103B leftward by a predetermined amount as an input condition for satisfying the installation condition. For example, the processor 12 sets the distance between the chair 103B and the right end of the acoustic space interface 101 to be the same as the distance before the change of the acoustic space. Then, the processor 12 moves the object of the desk 103A leftward by a predetermined amount in conjunction with the object of the chair 103B. In this way, when receiving the correction of the acoustic space as the change of the input condition, the processor 12 may correct the position of the object that does not satisfy the installation condition and correct, in conjunction with the object, the position of another object.

### Other Examples

It is not necessary to perform the movement processing of the object to be linked at the time of the drag operation in real time. For example, the processor 12 may perform the movement processing of the object to be linked every time a predetermined time (for example, one second) elapses.

The object to be linked may be temporarily released. For example, when the user taps and selects the object of the desk 103A, if the user simultaneously taps and selects the object of the projector 103E, the processor 12 temporarily cancels the linkage of the projector 103E. The user can also move only the object of the desk 103A without moving the projector 103E by performing a drag operation only on the object of the desk 103A in a state in which the object of the desk 103A and the object of the projector 103E are simultaneously selected.

The modification of the input condition includes an operation of Undo, Redo, or Copy and Paste. For example, the processor 12 moves the object of the desk 103A, moves the object of the projector 103E in conjunction therewith, and then returns the object of the desk 103A to the original position and returns the object of the projector 103E to the original position when the undo operation is received.

The description of the present embodiment should be considered to be illustrative in all respects and not restrictive. The scope of the present invention is indicated by the claims rather than the embodiment described above. Further, the scope of the present invention includes the scope equivalent to the claims.

## Claims

1. An arrangement design support method for an acoustic device, the arrangement design support method comprising:
receiving an input condition including an acoustic space and positions of a plurality of objects in the acoustic space;
calculating an arrangement distribution of the acoustic device corresponding to the received input condition in the received acoustic space;
outputting the calculated arrangement distribution; and
correcting the input condition by correcting a position of another object in conjunction with correction of a position of at least one object of the plurality of objects based on information on an installation condition included in each of the plurality of objects, in a case that correction of the input condition is received.

2. The arrangement design support method according to claim 1,
wherein the correction of the input condition includes movement, deletion, addition, or size change of the at least one object.

3. The arrangement design support method according to claim 2, further comprising moving the another object in conjunction with movement of the at least one object.

4. The arrangement design support method according to claim 3,
wherein the movement of the at least one object includes rotational movement, and
in conjunction with rotational movement of the at least one object, the another object is rotationally moved about a same rotation axis.

5. The arrangement design support method according to any one of claims 1 to 4, further comprising
outputting a notice indicating that the another object that is linked when selection of the at least one object of the plurality of objects is received based on the information on the installation condition, in the state where the request for correction of the input condition is received .

6. The arrangement design support method according to any one of claims 1 to 4, further comprising
notifying a warning in a state where the installation condition is not satisfied by correcting the position of the other object in conjunction with the correction of the position of the at least one object.

7. The arrangement design support method according to any one of claims 1 to 4, further comprising
presenting another input condition for satisfying the installation condition in a state where the installation condition is not satisfied by correcting the position of the other object in conjunction with the correction of the position of the at least one object.

8. The arrangement design support method according to claim 7, further comprising
outputting the input condition corresponding to the correction of the position of the at least one object of the plurality of objects based on a trained model trained to output the input condition satisfying the installation condition for the correction of the position of the at least one object of the plurality of objects.

9. The arrangement design support method according to any one of claims 1 to 4,
wherein the information on the installation condition is defined by a table in which a relation between the plurality of objects is defined in advance.

10. The arrangement design support method according to any one of claims 1 to 4,
wherein the information on the installation condition is defined based on a trained model in which a relation between the plurality of objects is trained in advance.

11. The arrangement design support method according to any one of claims 1 to 4, further comprising:
displaying a GUI configured to receive the acoustic space and the input condition on a display; and
changing a scale of the acoustic space while maintaining a margin in the GUI, in a state where a size change of the acoustic space is received,.

12. An information processing device comprising:
a memory storing instructions;
a processor that implements the instructions to:
receive an input condition including an acoustic space and positions of a plurality of objects in the acoustic space;
calculate an arrangement distribution of an acoustic device corresponding to the received input condition in the received acoustic space;
output the calculated arrangement distribution; and
corrects the input condition by correcting a position of another object in conjunction with correction of a position of at least one object among the plurality of objects based on the information on an installation condition included in each of the plurality of objects, in a state where a request for correction of the input condition is received.

13. A non-transitory computer readable storage medium storing a program causing an information processing device to execute processing of:
receiving an input condition including an acoustic space and positions of a plurality of objects in the acoustic space;
calculating an arrangement distribution of an acoustic device corresponding to the received input condition in the received acoustic space;
outputting the calculated arrangement distribution; and
correcting the input condition by correcting a position of another object in conjunction with correction of a position of at least one object among the plurality of objects based on the information on an installation condition included in each of the plurality of objects, in a state where a request for correction of the input condition is received.
